# EUROPEAN PATENT SPECIFICATION

(11) **EP 4 418 635 B1**
(45) Date of publication and mention of the grant of the patent: **26.03.2025**
(21) Application number: 24155626.5
(22) Date of filing: 02.02.2024
(51) Int. Cl.: H04L 69/22, H04L 45/74, H04L 67/12

(54) **PROCESSING SYSTEM, RELATED INTEGRATED CIRCUIT, DEVICE AND METHOD**
VERARBEITUNGSSYSTEM, ZUGEHÖRIGE INTEGRIERTE SCHALTUNG, VORRICHTUNG UND VERFAHREN
SYSTÈME DE TRAITEMENT, CIRCUIT INTÉGRÉ ASSOCIÉ, DISPOSITIF ET PROCÉDÉ

(30) Priority: 20.02.2023 IT 202300002871
(43) Date of publication of application: 21.08.2024
(73) Proprietor: STMicroelectronics International N.V., 1228 Plan-les-Ouates, Geneva (CH)
(72) Inventor: RE FIORENTIN, Lorenzo, I-10141 Torino (IT); BORGONOVO, Giampiero, I-20833 Giussano (Monza Brianza) (IT); DI CARLO, Gianluca, I-20134 Milano (IT)
(74) Representative: Buzzi, Notaro & Antonielli d'Oulx S.p.A.

(56) References cited:
- US-A1- 2015 281 120
- US-B1- 10 057 162

## Description

### Technical Field

Embodiments of the present disclosure relate to processing systems, such as multi-core microcontrollers, comprising one or more network ports.

### Background

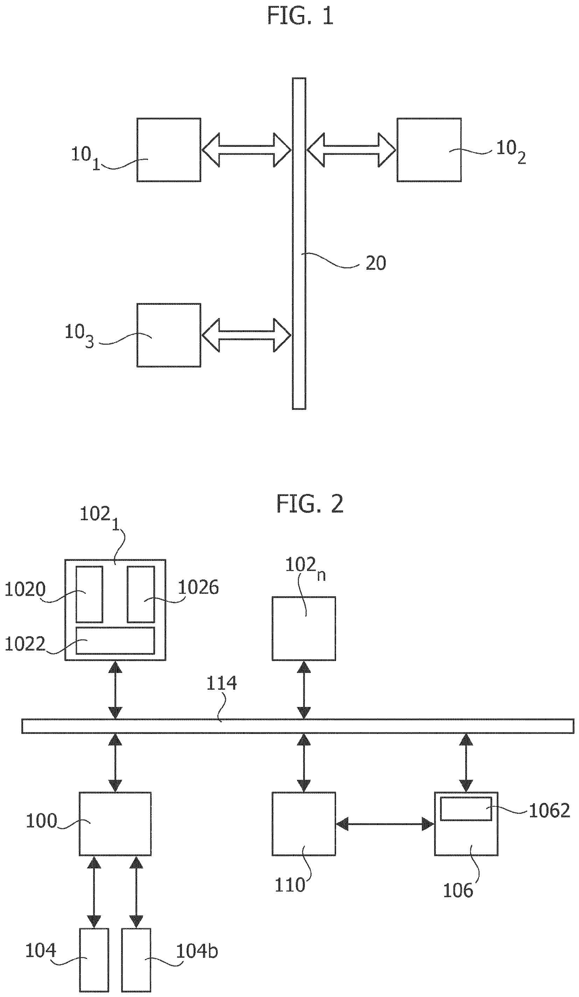

Figure 1 shows a typical electronic system, such as the electronic system of a vehicle, comprising a plurality of processing systems 10, such as embedded systems or integrated circuits, *e.g.,* a Field Programmable Gate Array (FPGA), a Digital Signal Processor (DSP) or a micro-controller (*e.g.,* dedicated to the automotive market).

For example, in Figure 1 are shown three processing systems 10₁, 10₂ and 10₃ connected through a suitable communication system 20. For example, the communication system may include a vehicle control bus, such as a Controller Area Network (CAN) bus, and possibly a multimedia bus, such as a Media Oriented Systems Transport (MOST) bus, connected to vehicle control bus via a gateway. Typically, the processing systems 10 are located at different positions of the vehicle and may include, e.g., an Engine Control Unit, a Transmission Control Unit (TCU), an Anti-lock Braking System (ABS), a Body Control Module (BCM), and/or a navigation and/or multimedia audio system. Accordingly, one or more of the processing systems 10 may also implement real-time control and regulation functions. These processing systems are usually identified as Electronic Control Units (ECU).

In this respect, future generation of such processing systems 10, *e.g.,* microcontrollers adapted to be used in automotive applications, are expected to exhibit an increase in complexity, mainly due to the increasing number of requested functionalities (new protocols, new features, etc.) and to the tight constraints of execution conditions (*e.g.,* lower power consumption, increased calculation power and speed, etc.). For example, recently more complex multi-core processing systems 10 have been proposed. For example, such multi-core processing systems may be used to execute (in parallel) several of the processing systems 10 shown in Figure 1, such as several ECUs of a vehicle.

Figure 2 shows an example of a processing system 10, such as a multi-core processing system. Specifically, in the example considered, the processing system 10 comprises one or more processing cores 102, such as a plurality of n processing cores 102₁...102ₙ, connected to a (on-chip) communication system 114. For example, in the context of real-time control systems, the processing cores 102₁...102ₙ may be ARM Cortex^{®}-R52 cores. Generally, the communication system 114 may comprise one or more bus systems, *e.g.,* based on the Advanced eXtensible Interface (AXI) bus architecture, and/or a Network-on-Chip (NoC).

For example, as shown at the example of the processing core 102₁, each processing core 102 may comprise a microprocessor 1020 and a communication interface 1022 configured to manage the communication between the microprocessor 1020 and the communication system 114. Typically, the interface 1022 is a master interface configured to forward a given (read or write) request from the microprocessor 1020 to the communication system 114, and forward an optional response from the communication system 114 to the microprocessor 1020. However, the communication interface 1022 may also comprise a slave interface. For example, in this way, a first microprocessor 1020 may send a request to a second microprocessor 1020 (via the communication interface 1022 of the first microprocessor, the communication system 114 and the communication interface 1022 of the second microprocessor). Generally, each processing core 102₁...102ₙ may also comprise further local resources, such as one or more local memories 1026, usually identified as Tightly Coupled Memory (TCM).

Typically, the processing cores 102 are arranged to exchange data with one or more non-volatile memories 104 and/or one or more volatile memories 104b. Generally, the memories 104 and/or 104b may be integrated with the processing cores 102 in a single integrated circuit, or the memories 104 and/or 104b may be in the form of a separate integrated circuit and connected to the processing cores 102, *e.g.,* via the traces of a printed circuit board.

Specifically, in a multi-core processing system 10 these memories are often system memories, *i.e.,* shared for the processing cores 102₁...102ₙ. For example, for this purpose, the communication with the memories 104 and/or 104b may be performed via one or more memory controllers 100 connected to the communication system 114. As mentioned before, each processing cores 102 may, however, comprise one or more additional local memories 1026.

For example, the software executed by the microprocessor(s) 1020 is usually stored in a non-volatile (program) memory 104, such as a Flash memory or EEPROM, *i.e.,* the memory 104 is configured to store the firmware of the processing unit 102, wherein the firmware includes the software instructions to be executed by the microprocessor 102. Generally, the non-volatile memory 104 may also be used to store other data, such as configuration data, *e.g.,* calibration data. Conversely, a volatile memory 104b, such as a Random-Access-Memory (RAM), may be used to store temporary data.

Often, the processing system 10 comprises also one or more (hardware) resources/peripherals 106, *e.g.,* selected from the group of:
- one or more communication interfaces, *e.g.,* for exchanging data via the communication system 20, such as a Universal asynchronous receiver/transmitter (UART), Serial Peripheral Interface Bus (SPI), Inter-Integrated Circuit (I²C), Controller Area Network (CAN) bus, and/or Ethernet interface, and/or a debug interface; and/or
- one or more analog-to-digital converters and/or digital-to-analog converters; and/or
- one or more dedicated digital components, such as hardware timers and/or counters, or a cryptographic co-processor; and/or
- one or more analog components, such as comparators, sensors, such as a temperature sensor, etc.; and/or
- one or more mixed signal components, such as a PWM (Pulse-Width Modulation) driver.

The resources 106 are usually connected to the communication system 114 via a respective communication interface 1062, such as a peripheral bridge. For example, for this purpose, the communication system 114 may indeed comprise an Advanced Microcontroller Bus Architecture (AMBA) High-performance Bus (AHB), and an Advanced Peripheral Bus (APB) used to connect the resources/peripherals 106 to the AMBA AHB bus. In general, the communication interface 1062 comprises at least a slave interface. For example, in this way, a processing core 102 may send a request to a resource 106 and the resource returns given data. Generally, one or more of the communication interfaces 1062 may also comprise a respective master interface. For example, such a master interface, often identified as integrated Direct Memory Access (DMA) controller, may be useful in case the resource has to start a communication in order to exchange data via (read and/or write) request with another circuit connected to the communication system 114, such as a resource 106 or a processing core 102.

Often such processing systems 10 comprise also one or more general-purpose DMA controllers 110. For example, as shown in Figure 2, a DMA controller 110 may be used to directly exchange data with a memory, *e.g.,* the memory 104b, based on requests received from a resource 106. For example, in this way, a communication interface may directly read data (via the DMA controller 110) from the memory 104b and transmit these data, without having to exchange further data with a processing unit 102. Generally, a DMA controller 110 may communicate with the memory or memories via the communication system 114 or via one or more dedicated communication channels.

As mentioned before, automotive technology is rapidly developing and new complex automotive applications often have significant bandwidth requirements for in-vehicle connections. For example, usually the communications between the ECUs of a vehicle use one or more Controller Area Network buses. Recently, it has been proposed to use for these communications (at least in part) Ethernet communication channels, *e.g.,* by using the Internet Protocol (IP), *e.g.,* the Transmission Control Protocol (TCP) also identified as TCP/IP

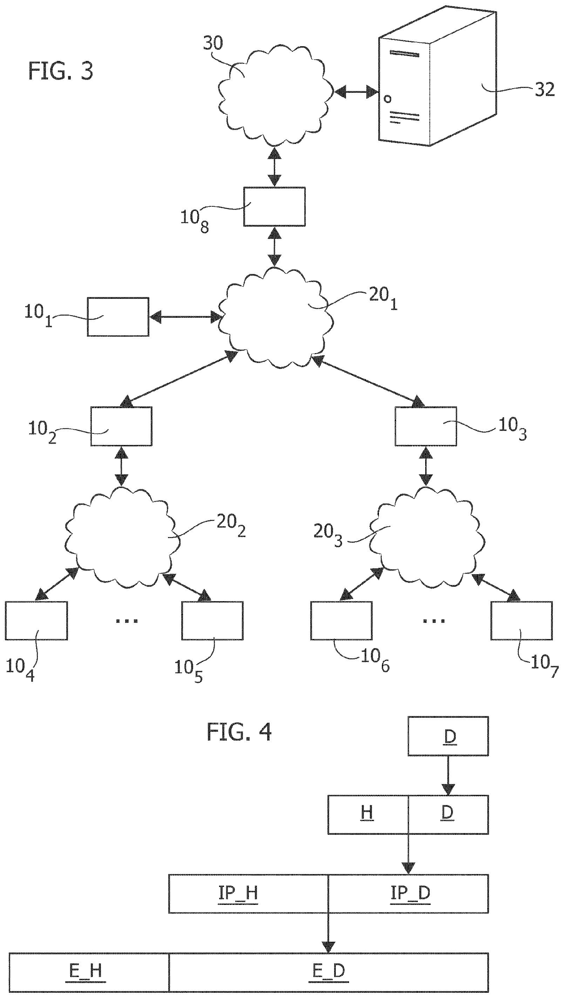

For example, as shown in Figure 3, the electronic system of a vehicle may comprise (at least) three processing systems 10₁, 10₂ and 10₃ connected via a first communication system 20₁ being an Ethernet network.

In the example considered, one or more of these processing systems, such as the processing systems 10₂ and 10₃, may be connected to further processing systems, such as processing systems 10₄, 10₅, 10₆ and 10₇, via one or more further communication system 20₂ and 20₃. In general, these further communication systems may be based on Ethernet and/or other communication systems. For example, the communication system 20₂ may be based on Ethernet, while the communication system 20₃ may be a CAN bus. Accordingly, the processing system 10₂ may be configured as a router configured to forward data between the Ethernet networks 20₁ and 20₂. Conversely, the processing system 10₃ may be configured as a gateway configured to exchange data between the Ethernet network 20₁ and the CAN bus 20₃, also implementing a protocol conversion. For example, the communication channel 20₃ may be a low-speed communication channel used for a front, rear and/or interior lighting system. Accordingly, the various processing systems 10 of the vehicle shown in Figure 3 are connected via a Local Area Network (LAN), which comprises one or more Ethernet networks 20₁ and 20₂, and optionally further networks 20₃.

As shown in Figure 3, modern vehicles are often also connected to a Wide Area Network (WAN) 30, such as the Internet. For example, in this case, a processing system 10₈ is a router configured to exchange data between the LAN 20 and the WAN 30, *e.g.,* for exchanging data with a remote server 32.

Accordingly, in the scenario shown in Figure 3, each processing systems connected to an Ethernet network comprising a respective Ethernet communication interface. For example, in the example considered:
- the processing system 10₁ comprises an Ethernet communication interface for connection to the Ethernet network 20₁;
- the processing system 10₂ comprises two Ethernet communication interfaces for connection to the Ethernet networks 20₁ and 20₂;
- the processing system 10₃ comprises an Ethernet communication interface for connection to the Ethernet network 20₁ and a CAN communication interface for connection to the CAN bus 20₃; and
- the processing system 10s comprise an Ethernet communication interface for connection to the Ethernet network 20₁ and a further communication interface for connection to the WAN 30.

Typically, the further communication interface of the processing system 10₈ is a mobile communication interface, such as a 2G, 3G, 4G or 5G communication interface, such as an LTE (Long-Term Evolution) transceiver, and/or a wireless communication interface according to one of the versions of the IEEE 802.11 standard.

In this respect, as mentioned before, a plurality of the ECUs may also be implemented with the same multicore processing systems 10. For example, the ECUs 10₄ and 10₅ may indeed be implemented with the same physical multicore processing system, *e.g.,* by using one or more dedicated processing cores 102 for each ECU or by using a virtualization with a hypervisor. Accordingly, in this case, the processing system may comprise for each ECU (10₄ and 10₅) a respective dedicated physical Ethernet communication interface, or the processing system may comprise a physical Ethernet communication interface connected to the Ethernet network 20₂ and emulate for each ECU a respective virtual communication interface. Generally, a virtual communication interface may be emulated at the Ethernet frame level, in particular by emulating a plurality of Media Access Control (MAC) addresses with the same physical Ethernet communication interface, or at the higher protocol layers, *e.g.,* by assigning a plurality of IP addresses to the same Ethernet communication interface.

In general, as represented in Figure 4, an IP packet comprises a header IP_H and the respective data IP_D as payload, where the header IP_H contains the address of the sender, *i.e.,* the source IP address, and the address of the target, i.e., the destination IP address. In this respect, according to the IP protocol, the data IP_D of an IP packet typically do not correspond directly the application data D, but the application data D are encapsulated in a packet of the transport layer, such as a UDP (User Datagram Protocol) packet or a TCP (Transmission Control Protocol) packet, which in turn comprises a header H and, as payload, the data D, *i.e.,* the IP data IP_D may comprise an additional transport-layer header H and the application data D. For example, the UDP or TCP headers enable specification of an additional port number for communication. The differences between UDP and TCP protocols are well known to the persons skilled in the sector, thus rendering a more detailed description herein superfluous.

In the context of an Ethernet communication, the IP packet is then included in an Ethernet frame comprising an Ethernet header E_H and the IP packet as payload E_D. For example, the Ethernet header E_H comprises a destination MAC address and a source MAC address. Typically, the Ethernet frame comprises also additional Cyclic Redundancy Check (CRC) data.

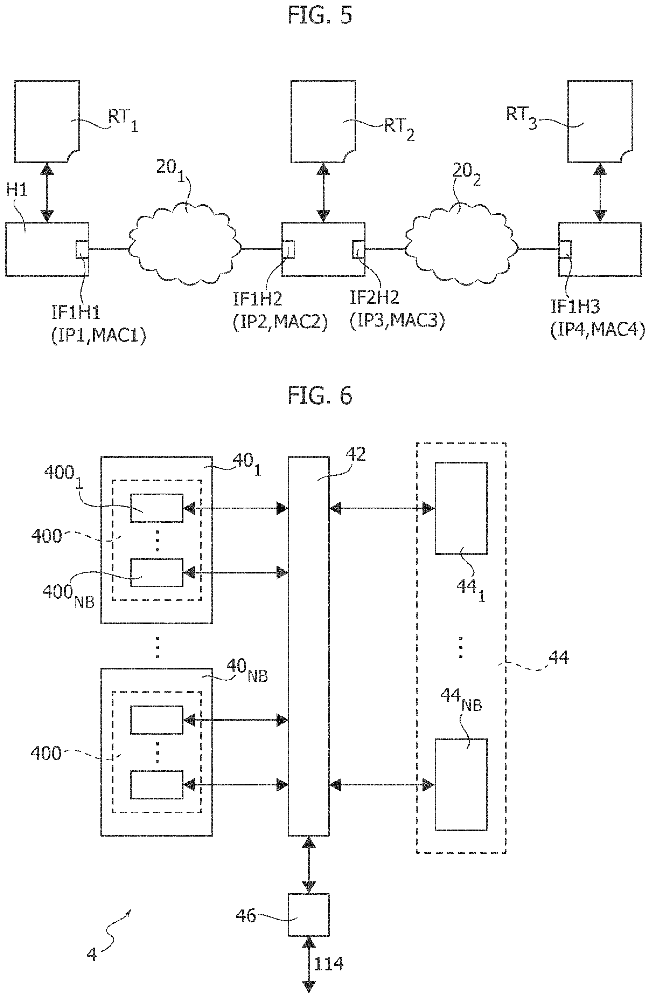

Figure 5 shows in this respect a typical data exchange for sending an IP packed from a host H1 via a host H2 to a host H3.

Specifically, in the example considered, the hosts H1 and H2 are connected to a first Ethernet network 20₁ having assigned a first IP address range, *e.g.,* 192.168.0.0/24. For this purpose, the host H1 comprises an Ethernet communication interface IF1H1 having a MAC address MAC1, wherein a first IP address IP1 in the first IP address range is associated with the communication interface IF1H1, such as 192.168.0.2, and the host H2 comprises an Ethernet communication interface IF1H2 having a MAC address MAC2, wherein a second IP address IP2 in the first IP address range is associated with the communication interface IF1H2, such as 192.168.0.1.

Similarly, the hosts H2 and H3 are connected to a second Ethernet network 20₂ having assigned a second IP address range, *e.g.,* 192.168.1.0/24. For this purpose, the host H2 comprises a further Ethernet communication interface IF2H2 having a MAC address MAC3, wherein a third IP address IP3 in the second IP address range is associated with the communication interface IF2H2, such as 192.168.1.1, and the host H3 comprises an Ethernet communication interface IF1H3 having a MAC address MAC4, wherein a fourth IP address IP4 in the second IP address range is associated with the communication interface IF1H3, such as 192.168.1.2.

Accordingly, in order to send a data packet from the host H1 to the host H2, wherein the IP packet header IP_H comprises as source address the IP address IP1 (*e.g.,* 192.168.0.2) and as destination address the IP address IP2 (*e.g.,* 192.168.0.1), the host H1 has to generate an Ethernet frame comprising (in addition to the IP packet) as source MAC address the address MAC1 and as destination MAC address the address MAC2, wherein the host H1 transmits this Ethernet frame via the communication interface IF1H1 to the network 20₁, which in turn forwards the Ethernet frame to the interface IF1H2 of the host H2.

Conversely, in order to send a data packet from the host H1 to the host H3, wherein the IP packet header IP_H comprises as source address the IP address IP1 (*e.g.,* 192.168.0.2) and as destination address the IP address IP4 (*e.g.,* 192.168.1.2), indeed two communications are required.

Specifically, first the host H1 has to determine that the host H3 may be reached via the host H2. Then the host H1 has to generate an Ethernet frame comprising (in addition to the IP packet) as source MAC address the address MAC1 and as destination MAC address the address MAC2, wherein the host H1 transmits this Ethernet frame via the communication interface IF1H1 to the network 20₁, which in turn forwards the Ethernet frame to the interface IF1H2 of the host H2.

The host H2 then processes the received IP packet included in the Ethernet frame in order to determine that the included IP packet should be transmitted to an IP address not managed by the host H2, wherein the respective host is reachable via the interface IF2H2. Accordingly, at this point, the host H2 has to generate an Ethernet frame comprising (in addition to the IP packet) as source MAC address the address MAC3 and as destination MAC address the address MAC4, wherein the host H2 transmits this Ethernet frame via the communication interface IF2H2 to the network 20₂, which in turn forward the Ethernet frame to the interface IF1H3 of the host H3.

Accordingly, in order to correctly forward IP packets, each host H1, H2 and H3 has to manage a routing table, which often comprises the following data for each route:
- data identifying a network destination address range, such as 192.168.0.0/24;
- data identifying a gateway or next-hop, *i.e.,* the address of the next host to which the IP packet is to be sent on the way to its final destination;
- optionally, the communication interface to be used to reach the next-hop, which may be omitted in case the host comprises only a single interface;
- optionally a metric indicating the associated cost of using the indicated route.

For example, the host H1 may have associated a routing table RT1 indicating that the subnetwork assigned to the network 20₁ may be reached directly via the interface IF1H1, while the subnetwork assigned to the network 20₂ may be reached by using as gateway/next-hop the IP address IP2. The Ethernet communication interface IF1H1 may then determine the MAC address associated with the next-hop, *i.e.,* the MAC address MAC2, and generate the respective Ethernet frame.

Conversely, the host H2 may have associated a routing table RT1 indicating that the subnetwork assigned to the network 20₁ may be reached directly via the interface IF1H2, and the subnetwork assigned to the network 20₂ may be reached directly via the interface IF2H2.

Accordingly, in a scenario as shown in Figure 3, the routing tables used by the various processing systems 10 may be rather complex, and a significant time may be required in order to process the routing table in order to identify the correct route. For this reason, many modern processing systems, in particular in the context of gateway nodes, comprise integrated network accelerators, which can switch/route packets among the different (physical or virtual) network ports with a minimal intervention of the microprocessors 102.

Accordingly, the present invention relates to a processing system comprising a hardware network accelerator according to the preamble of Claim 1, which is known, e.g., from document US 2015/281120 A1. Document US 10 057 162 B1 may also be of interest for the present invention.

### Summary

In view of the above, various embodiments of the present disclosure provide solutions for integrated network accelerators, in particular in the context of the organization and management of IP routing tables.

According to one or more embodiments, the above objective is achieved by means of a processing system having the features specifically set forth in the claims that follow. Embodiments moreover concern a related integrated circuit, device and method.

The claims are an integral part of the technical teaching of the disclosure provided herein.

As mentioned before, various embodiments of the present disclosure relate to a processing system comprising a hardware network accelerator. In various embodiments, the hardware network accelerator comprises a plurality of Ethernet communication interfaces.

In various embodiments, the hardware network accelerator comprises moreover a plurality of memories and a further memory. Specifically, each of the plurality of memories is configured to store a plurality of records, wherein each record comprises enable data indicating whether the respective record contains valid data and destination IP data identifying a destination IP address range. Conversely, the further memory is configured to store a plurality of further records, wherein each record is associated univocally with a respective further record, and wherein each further record comprises next-hop data indicating a next-hop IP address, next-hop enable data indicating whether a respective destination IP address range may be reached directly or via the respective next-hop IP address, and network port data indicating one of the Ethernet communication interfaces.

For example, in various embodiments, each record comprises a first data section comprising a destination IP address included in the respective destination IP address range, and a first control data section comprising the enable data and a field for storing a subnet or network mask for the respective destination IP address range. Conversely, each further record may comprise a second data section comprising the next-hop IP address, and a second control data section comprising the next-hop enable data and the network port data.

In various embodiments, each Ethernet communication interface is configured to obtain an IP packet comprising a destination IP address. Next, the Ethernet communication interface accesses in parallel the plurality of memories in order to sequentially read at least in part the records stored to each of the plurality of memories, and compares the destination IP address with the destination IP data of the read records containing valid data in order to select a record having a destination IP address range containing the destination IP address.

For example, in order to access in parallel the plurality of memories, each Ethernet communication interface may comprise a search engine comprising a plurality of search circuits, wherein each search circuit is configured to access a respective memory of the plurality of memories in order to sequentially read at least in part the records stored to the respective memory of the plurality of memories, and compare the destination IP address with the destination IP data of the respective read records containing valid data in order to determine whether the record has a destination IP address range containing the destination IP address. For example, each search circuit may be configured to sequentially read the records stored to the respective memory of the plurality of memories until the enable data indicate that the respective record does not contain valid data or at least one of the search circuits determines that a record has a destination IP address range containing the destination IP address.

Once a record is selected, the Ethernet communication interface reads the further record associated with the selected record from the further memory, and selects one of the Ethernet communication interfaces based on the network port data of the read further record.

In various embodiments, in order to manage plural communications, the hardware network accelerator may comprise a memory controller configured to decide, which of the Ethernet communication interfaces may access the plurality of memories and the further memory.

Accordingly, in various embodiments, the selected Ethernet communication interface may determine a target IP address by selecting the destination IP address when the next-hop enable data of the read further record indicate that the respective destination IP address range may be reached directly, or the next-hop IP address of the read further record when the next-hop enable data of the read further record indicate that the respective destination IP address range may be reached via the respective next-hop IP address. Next, the selected Ethernet communication interface may determine a target Media Access Control (MAC) address for the target IP address, generate an Ethernet frame comprising an Ethernet header and as payload the IP packet, wherein the Ethernet header comprises as destination MAC address the target MAC address and a source MAC address configured for the respective Ethernet communication interface. Finally, the selected Ethernet communication interface may transmit the Ethernet frame to an Ethernet network connected to the selected Ethernet communication interface.

In various embodiments, the processing system comprises also a microprocessor and a communication system connecting the microprocessor to the hardware network accelerator, wherein the microprocessor is adapted to program the records in the plurality of memories and the further records in the further memory.

For this purpose, the hardware network accelerator may comprise an address translation and dispatcher circuit configured to manage an address map, wherein each memory location in the plurality of memories and each memory location in the further memory is associated with a respective memory address in the address map. Accordingly, the address translation and dispatcher circuit may receive a memory write request comprising a memory address in the address map and respective data to be stored, select one of the plurality of memories and the further memory based on the received memory address, select a memory location of the selected memory based on the received memory address, and store the data to be stored to the selected memory location of the selected memory.

For example, in various embodiments, the memory address comprises a first field, a second field and a third field, wherein the first field indicates whether the received data should be stored to the plurality of memories or the further memory. When the first field indicates that the received data should be stored to the plurality of memories, the second field indicates a record in the plurality of memories, and the third field indicates whether the received data should be stored to the first data section or the first control data section of the record indicated by the second field. Conversely, when the first field indicates that the received data should be stored to the further memory, the second field indicates a further record in the further memory, and the third field indicates whether the received data should be stored to the second data section or the second control data section of the further record indicated by the second field.

In various embodiments, at least one of the first data section, the first control data section, the second data section and the second control data section may be stored to a plurality of memory slots in the respective memory. In this case, the respective memory address may comprise a fourth field indicating a respective memory slot of the respective plurality of memory slots.

In various embodiments, each memory location of the plurality of memories and the further memory may comprise a plurality of bytes. In this case, the memory address may comprise a fifths field indicating a sub-set of the bytes of the memory slot indicated by the first field, the second field, the third field, and optionally the fourth field.

In various embodiments, the hardware network accelerator may communicate with the microprocessor via a slave interface and/or (indirectly) via a DMA transfer. For example, when the communication system comprises a slave communication interface associated with the hardware network accelerator, the slave communication interface may be configured to receive a write request from the microprocessor, wherein the write request comprising an address in a physical address sub-range associated with the slave communication interface and respective transmitted data. Next, the slave interface may extract a memory address in the address map of the address translation and dispatcher circuit from the address in the physical address sub-range, and provide a memory write request to the address translation and dispatcher circuit, wherein the memory write request comprises the extracted memory address and the transmitted data.

Accordingly, in various embodiments, the microprocessor may program a plurality of records in the plurality of memories and respective further records in the further memory. Next, an IP packet may be provided to one of the Ethernet communication interface, whereby the Ethernet communication interface uses the plurality of records in the plurality of memories and the respective further records in the further memory in order to select one of the Ethernet communication interfaces, and the selected Ethernet communication interface generates an Ethernet frame and transmits the Ethernet frame to an Ethernet network connected to the selected Ethernet communication interface.

### Brief description of the figures

Embodiments of the present disclosure will now be described with reference to the annexed drawings, which are provided purely by way of non-limiting example and in which:
- Figure 1 shows an example of an electronic system comprising a plurality of processing systems;
- Figure 2 shows an example of a processing system;
- Figure 3 shows an example of the communication system of an electronic system comprising a plurality of processing systems;
- Figure 4 shows the packet structure of an IP communication over Ethernet;
- Figure 5 shows an example of a data exchange using an IP communication over Ethernet;
- Figure 6 shows an embodiment of an integrated network accelerator;
- Figure 7 shows an embodiment of the organization of a plurality of memory banks adapted to store a routing table in the integrated network accelerator of Figure 6;
- Figure 8 shows a further embodiment of the organization of a plurality of memory banks adapted to store a routing table;
- Figure 9 shows an embodiment of an integrated network accelerator using the memory banks and routing table of Figure 8;
- Figures 10 and 11 show embodiments of control data of the routing table of Figure 8;
- Figures 12 and 13 show embodiments of an address map used to program the routing table in the integrated network accelerator of Figure 9;
- Figure 14 shows an embodiment of a memory control circuit for the integrated network accelerator of Figure 9;
- Figures 15 and 16 show embodiments of read or write requests to be processed by a slave communication interface associated with the memory control circuit of Figure 14; and
- Figure 17 shows an embodiment of the operation of the memory control circuit of Figure 14 for accessing the memory banks of Figure 9.

### Detailed Description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

In the following Figures 6 to 17 parts, elements or components which have already been described with reference to Figures 1 to 5 are denoted by the same references previously used in such Figure; the description of such previously described elements will not be repeated in the following in order not to overburden the present detailed description.

As mentioned before, various embodiments of the present disclosure provide solutions for integrated network accelerators, in particular in the context of the organization and management of IP routing tables.

Figure 6 shows an embodiment of a network accelerator 4.

Specifically, such a network accelerator 4 may be used as a resource 106 in the processing system 10 shown in Figure 2, which in turn may be used in any of the applications described with respect to Figures 1 to 5.

Specifically, in the embodiment considered, the network accelerator 4 comprises at least one communication interface 40 often also indicated as network port. For example, in Figure 6 are shown NP communication interfaces 40₁ to 40_{NP}. Specifically, each of the communication interfaces 40 may be connected to a respective Ethernet communication network 20. Generally, as described in the foregoing, the communication interfaces 40 may be connected to different networks 20 or at least part of the communication interfaces 40 may be connected to the same network 20, *e.g.,* in case the processing system 10 implements a plurality of ECUs connected to the same network 20. In general, in order to connect a communication interface 40 to a network 20, the communication interface 40 may also comprise a respective Ethernet transceiver, or the Ethernet transceiver may be external with respect to the integrated circuit of the processing system 10. Accordingly, in various embodiments, each communication interface 40 implements at least the Ethernet layer and preferably also the physical layer used to exchange data with the network 20.

In various embodiments, the communication interface 40 obtains an IP packet comprising an IP header IP_H, which in turn includes a destination IP address (see Figure 4). In general, an IP packet may be obtained by generating the IP packet within the processing system 10 and/or receiving the IP packet via a communication interface 40.

For example, in various embodiments, the communication interface 40 is configured to receive data from the communication system 114 (not shown in Figure 6), e.g., (directly or indirectly via a DMA transfer) from a processing core 102 of the processing system 10 or a resource 106 of the processing system 10. For example, the communication interface 40 may already receive an IP packet. Alternatively, the communication interface 40 may also manage the IP layer and add an IP header IP_H, *e.g.,* by adding a source IP address configured for the communication interface 40 and/or a destination IP address based on data identifying a target of the communication. In various embodiments, the communication interface 40 may also be configured to manage a plurality of virtual IP interfaces, e.g., by configuring a plurality of IP source addresses, e.g., for different processing cores 102. In various embodiments, the communication interface 40 may also manage the transport layer, such as the UDP or TCP protocol, and add a transport layer header H. Accordingly, in various embodiments, the communication interface 40 may implement also at least in part the IP protocol layer and optionally the transport layer.

Conversely, in order to receive the IP packet from the network 20 to which the communication interface 40 is connected, the communication interface 40 may be configured to receive an Ethernet frame and extract the IP packet from the payload E_D of the Ethernet frame.

In various embodiments, an IP packet obtained by a communication interface 40 may be destined to (and should thus be routed to):
- the communication system 114, e.g., to a processing core 102 or another resource 106 within the processing system 10 (either directly or via a DMA transfer), e.g., by extracting the respective payload IP_D or D;
- to the network 20 to which the communication interface 40 is connected; or
- in case of a plurality of communication interfaces 40, to another communication interfaces 40 of the network accelerator 4.

Accordingly, in various embodiments, the network accelerator 4 may also be configured to implement an IP router. In this case, the generation of the IP packet within the processing system 10 and the forwarding of IP packets to the communication system 114 may be purely optional.

In various embodiments, the network accelerator 4, e.g., each communication interface, may also implement firewall functions, such as a destination IP address and/or (e.g., TCP and/or UDP) destination port filtering, and/or a source IP address and/or (e.g., TCP and/or UDP) source port filtering.

As described in the foregoing, in order to forward IP packets, the processing system 10 uses an IP routing table. For example, the IP routing table could be managed in software, wherein an IP packet received by a communication interface 40 from a respective network, is provided to a processing core 102, which then determines via software instructions whether the IP packet should be processed internally or forwarded to another communication 40.

Conversely, in various embodiments, the network accelerator 4 is configured to manage the routing of the IP packet directly in hardware. Specifically, in various embodiments, the network accelerator 4 comprises a routing table search engine 400 configured to analyses a routing table stored to a memory 44. In general, the search engine 400 may be common for the complete network accelerator 4 or (as shown in Figure 6) each communication interface 40 may comprise a respective search engine 400. Specifically, in the embodiment shown in Figure 6, each communication interface 40 may comprise a respective search engine 400, which is configured to access a memory 44 having stored an IP routing table, wherein the access to the memory 44 is managed via a memory controller 42. For example, the memory controller 42 may be configured to manage an arbitration in order to decide which search engine 400 may access the memory 44.

Accordingly, a processing core 102 may configure the IP routing table by writing the content of the memory 44. For example, for this purpose, the memory controller 42 may have associated a communication interface 46 connected to the communication system 114 of the processing system 10. For example, the communication interface 46 may be a slave interface of the communication system 114, such as a peripheral bridge. In general, the communication interface 46 may also be included in the memory controller 42.

Accordingly, once having obtained (i.e., received or generated) an IP packet, a communication interface 40 may access the memory 44 and read the IP routing table in order to decide how to forward the IP packet (to a network 20, another communication interface 40 or to a further circuit within the processing system 10, such as a processing core 102).

In various embodiments, in order to improve the velocity of the read operation of the IP routing table, the memory 44 may indeed be implemented with a plurality of NB memories 44₁ to 44_{NB}, such as a plurality of NB RAM banks. Accordingly, in this case, each search engine 400 may indeed comprise NB search circuits 400₁ to 400_{NB}, wherein each search circuit is configured to access a respective memory 44₁ to 44_{NB}.

Accordingly, once having processed the routing table, the search engine 400 may decide whether the IP packet should be forwarded to the respective network 20, another communication interface 40 or to a circuit 102/106 within the processing system 10. For example, in order to provide the data to a processing core 102, a resource 106 or another communication interface 40, the communication interface 40 may comprise an integrated DMA interface or may use a general-purpose DMA controller 110 configured to store the IP packet or the respective payload IP_D via a DMA transfer to the memory 104b or one or more dedicated RAM memories within the network accelerator 4. Conversely, in order to forward the IP packet to the network 20, the communication interface 40 may generate an Ethernet frame comprising the IP packet as payload E_D and an Ethernet header E_H comprising its own MAC address as source address and the MAC address of the next-hop as target address. In various embodiments, the communication interface 40 may also be configured to manage a plurality of virtual Ethernet interfaces, e.g., by configuring a plurality of source MAC addresses.

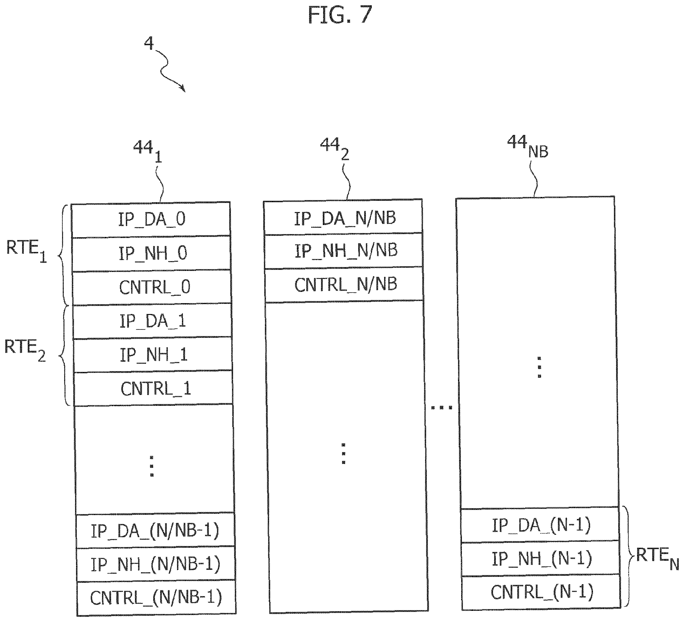

Figure 7 shows an embodiment of the organization of the memory 44.

Specifically, in the embodiment considered, the memory 44 comprises a given number N of routing table entry slots RTE₁ to RTE_{N}, wherein each slot RTE may store a respective routing table entry. For example, in case the memory 44 comprises NB memory banks 44₁ to 44_{NB}, each memory bank may store N/NB slots. For example, the first memory bank 44₁ may be arranged to store the slots RTE₁ to RTE_{N/NB}.

Specifically, in the embodiment considered, each routing table entry RTE comprises the following fields:
- a destination IP address field IP_DA adapted to specify a destination IP address;
- a next-hop IP address field IP_NH; and
- control data CNTRL.

For example, in various embodiments, the control data CNTRL comprise an enable field EN indicating that the respective routing table entry RTE contains valid data. Moreover, in various embodiments, the control data CNTRL comprise a field SUBNET for indicating a subnet or netmask for the destination IP address, which thus permits to specify (together with the destination IP address field IP_DA) a destination IP address range. In various embodiments, the control data CNTRL comprise also a field NH_EN, such as a next-hop address enable bit, indicating whether:
- a destination IP address in the destination IP address range may be reached directly, which implies that the next-hop address should correspond to the destination IP address of the IP packet, or
- a destination IP address in the destination IP address range may not be reached directly, which implies that the next-hop address should correspond to the address indicated in the next-hop IP address field IP_NH.

Accordingly, the control data CNTRL may indicate whether to use the IP address of the IP packet or the next-hop IP address field IP_NH as target for the Ethernet communication, which is then mapped by the communication interface 40 to a respective MAC address to be inserted in the Ethernet frame. Moreover, in case of a plurality of (physical or virtual) communication interfaces, a field DST_PORT of the control data CNTRL may specify a (physical or virtual) communication interface 40 to be used to transmit the IP packet.

In general, the number of physical memory slots/data words NW occupied by each routing table entry RTE may depend on the length of the IP address (*i.e.,* whether IPv4 or IPv6 addresses are supported) and the number of bits of each memory slot.

Accordingly, during a search process, a search engine 400 inside each communication interface 40 and having a parallelism equal to the number NB of memory banks, may accesses in parallel all NB memory banks 44₁ to 44_{NB}, read sequentially the stored entries RTE inside each memory bank and compare the specified destination IP addresses range (as indicated by the destination IP address IP DA and the control data CNTRL) with the destination IP address of the IP packet. In case of a match, the search process may be stopped and the control data CNTRL may be used to determine the target of the communication, e.g., for determining a communication interface 40 to be used to transmit the IP packet, and the IP address of the next target (i.e., the final destination or a gateway node indicated in the next-hop IP address field IP_NH).

Accordingly, if required, the communication interface 40 may forward the IP packet to the indicated communication interface 40. The indicated (virtual or physical) communication interface may then determine the destination MAC address associated with the IP address of the next target, generate the respective Ethernet frame (by adding the destination MAC address and its own MAC address as source MAC address) and transmit the Ethernet frame to the connected network 20. For example, as well known in the art, the communication interface 40 may manage for this purpose a table of devices connected to the respective network 20, wherein this table comprises the MAC addresses of the devices and the respective IP addresses. For example, such a table may be obtained via the Address Resolution Protocol (ARP) and is usually called ARP cache.

The inventors have observed that the previously described organization of the memory 44 has several disadvantages. In fact, in order to implement the search, it is sufficient that a search engine 400 is able to just determine the destination IP address range (as specified by the data IP_DA and CNTRL) of the routing table entries RTE having stored valid data (as specified by the data CNTRL). Accordingly, in order to implement a parallel search function, parallel access to the complete routing table entries RTE (in particular the data IP_NH) is not required, but a parallel access to the destination IP address IP_DA and part of the control data CNTRL is sufficient.

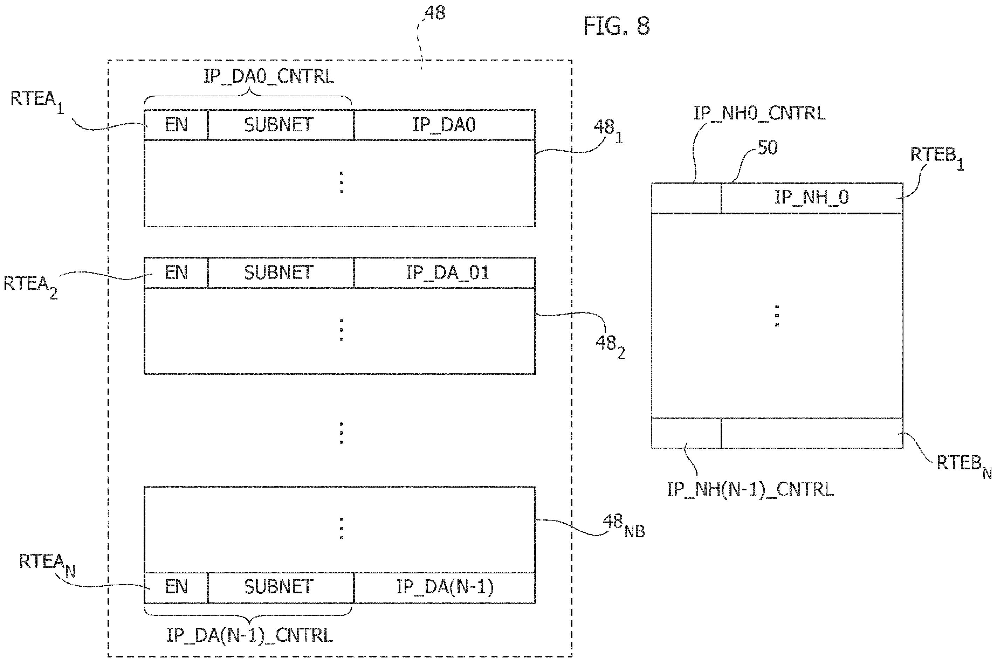

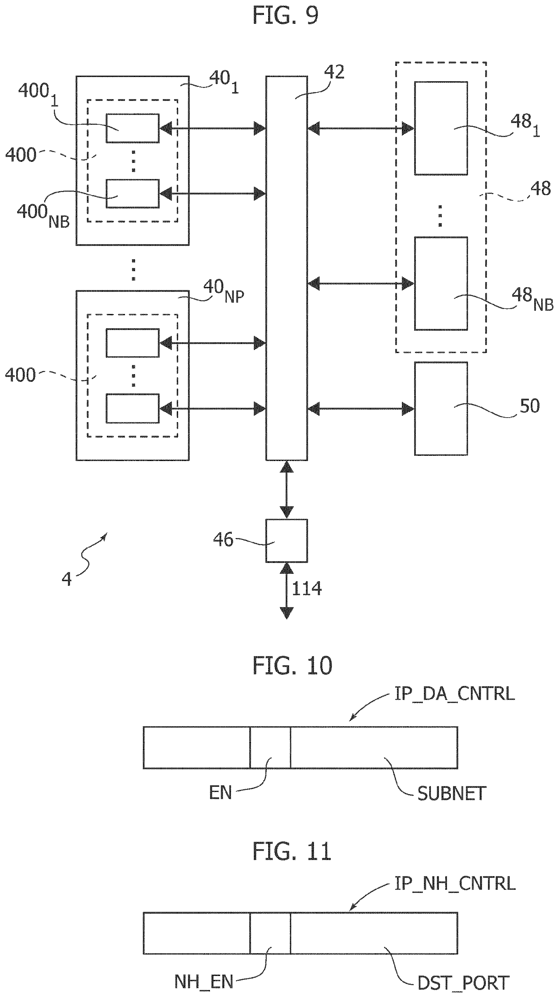

Accordingly, Figures 8 and 9 shows a different embodiment of the organization of the IP routing table.

Specifically, in the embodiment considered, the data of each routing data entry slots RTE₁ to RTE_{N} adapted to be stored to the memory 44 are now organized into two parts:
- a first part RTEA having stored the data used to determine whether the routing data apply to the destination IP address of the IP packet; and
- a second part RTEB having stored data specifying the routing behavior of the IP packet.

Accordingly, in line with the foregoing, the data of a given routing data entry slot RTEA may comprise:
- an enable field EN, such as an enable bit, indicating whether the respective routing table entry RTEA contains valid data; and
- data specifying a destination address range, e.g., comprising an IP address IP_DA and a field SUBNET specifying a subnet mask or alternatively a netmask.

For example, as shown in Figure 10, the enable field EN and the field SUBNET may be stored as control data IP_DA_CNTRL.

Conversely, the data of a given routing data entry slot RTEB may comprise:
- the next-hop IP address field IP_NH; and
- further control data IP_NH_CNTRL.

For example, as shown in Figure 11, the control data IP_NH_CNTRL may comprise data indicating whether to use the IP address of the IP packet or the next-hop IP address field IP_NH as target for the Ethernet communication, such as the previously mentioned next-hop address enable bit NH_EN, and a field DST_PORT specifying a communication interface 40 to be used to transmit the IP packet.

In the embodiment considered, the first part of routing data RTEA may thus be stored to respective routing data slots RTEA₁ to RTEA_{N} in a memory 48 and the second part of routing data RTEB may be stored to respective routing data slots RTEB₁ to RTEB_{N} in a memory 50.

Specifically, as shown in Figure 9, in order to permit a parallel search, the memory 48 may indeed be implemented with a plurality of NB (e.g., RAM) memories 48₁ to 48_{NB}, *i.e.,* each memory 48₁ to 48_{NB} has a respective interface and read access to the memory banks 48₁ to 48_{NB} may be performed in parallel by respective memory interfaces. For example, in the embodiment considered is again used a memory controller 42, which comprises for each memory 48₁ a respective interface and selectively forwards the read requests from the search engines 400 of the various communication interfaces 40₁ to 40_{NP}, in particular the respective NP search circuits 400₁ to 400_{NB}, to the NB memories 48₁ to 48_{NB}.

In various embodiments, instead of filling sequentially the slots of data RTEA₁ to RTEA_{N} in the various memories 48₁ to 48_{NB}, the data are stored in an interleaved manner to the memories 48₁ to 48_{NB}, i.e., the first data RTEA₁ associated with a first routing data entry RTE₁ are stored to the first slot of the first memory 48₁, the second data RTEA₂ associated with a second routing data entry RTE₁ are stored to the first slot of the second memory 48₂, ..., and the last data RTEA_{N} associated with a last routing data entry RTE_{N} are stored to the last slot of the last memory 48_{NB}.

Conversely, since a parallel access to the routing data RTEB may not be required, the data RTEB may be stored to a single memory 50. Accordingly, even though the memory 50 could indeed be implemented with a plurality of physical RAM memory banks, these memory banks are connected to the same memory interface of the memory controller 42.

Accordingly, in the embodiment considered, each search circuit 400₁ to 400_{NB} of a given communication interface 40 may access (via the memory controller 42) a respective memory 48₁ to 48_{NB}, and sequentially read the respective entries RTEA with an enable field EN indicating that the respective routing table entry RTEA contains valid data. In parallel the search engine 400 may determine whether the destination IP address of the IP packet is included in the destination address range indicated by the record RTEA.

Accordingly, once having found and selected a given record RTEA, the respective search circuit 400₁ to 400_{NB} or another circuit of the search engine 400 also knows the index of the selected record RTEA, and may use this index in order to read the respective data RTEB from the memory 50. In general, the data RTEB may be stored in any suitable manner to the memory 50, which still permits a univocal mapping of a given selected record RTEA to the respective record RTEB. For example:
- the records RTEA may be stored sequentially to the memories 48 and the records RTEB may be stored sequentially to the memory 50;
- the records RTEA may be stored in an interleaved manner to the memories 48 and the records RTEB may be stored sequentially to the memory 50; or
- the records RTEA may be stored in an interleaved manner to the memories 48 and the records RTEB may be stored in an interleaved manner to the memory 50.

Accordingly, in the embodiment considered, the memory 48 stores up to N records RTEA indicating the supported destination IP addresses IP_DA, the respective associated subnet mask SUBNET, and the entry enable field EN of the routing table entry RTE. This memory 48 may be implemented with a selectable level NB of parallelism. Preferably, an interleaved scheme is used to store the various records RTEA. Accordingly, the search engines 400 of the various communication interfaces 40₁ to 40_{NP} may have a parallelism equal to the number NB of memory banks 48₁ to 48_{NB}, and may sequentially read the content of the memory 48, which is shared among all the communication interfaces 40. As soon as a match is found, the search process may be stopped and the index of the matching entry may be used to access the respective record RTEB in the memory 50 of the same routing table entry RTE, wherein the record RTEB has stored the respective next-hop address IP_NH and the respective additional control data CNTRL. Accordingly, also the memory 50 is shared among all communication interfaces 40, and may be implemented using a single memory bank.

Generally, a routing table could also include a plurality of routes which could apply to a given destination IP address. Accordingly, in various embodiments, the search circuits 400₁ to 400_{NB} could return all matching records RTEA, and the search engine 400 could select a best matching route, e.g., by using a metric or cost stored with the control data CNTRL of the record RTEB. Conversely, as indicated in the foregoing, in various embodiments, the first matching route is selected. In this case, the records RTE (and accordingly the respective records RTEA and RTEB) should be ordered accordingly. For example, in typical routing methods, the longest matching mask is selected, i.e., the smallest matching destination address range IP_DA. Accordingly, in this case, the routing table entries RTE should be already stored to the memories 48 and 50 in the requested order. For example, such a re-ordering of the routing table may be managed by a processing core 102 of the processing system 10, which may write the memories 48 and 50.

Accordingly, in various embodiments, the content of memories 48 and 50 is programmable via a processing core 102 of the processing system 10. In general, any suitable address mapping may be used to map a given sub-range of the physical address range of the communication system 114 to the physical address range of the memories 48₁ to 48_{NB} and 50. In general, it is not required that these mapping indeed reflects the order of the storage locations within the memories 48₁ to 48_{NB} and 50.

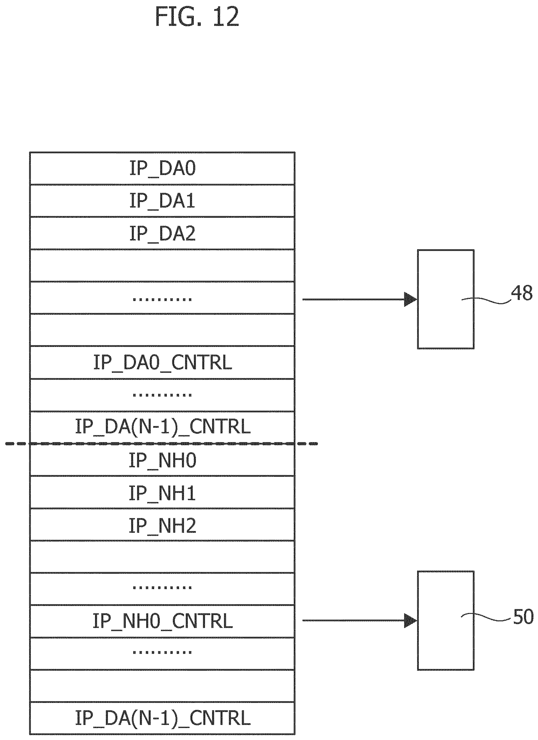

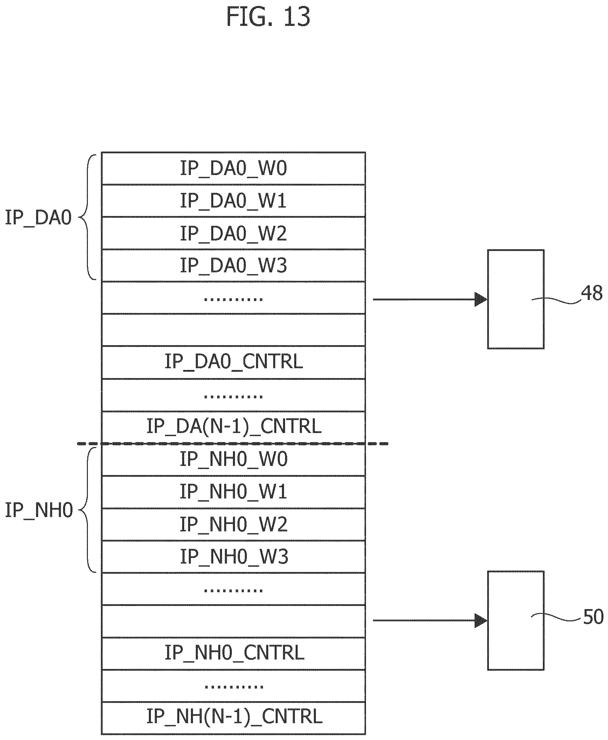

For example, Figures 12 and 13 show possible embodiments of the address map implemented within the memory controller. Specifically, in the embodiment shown in Figure 12, only IPv4 IP addresses are supported, while the embodiment shown in Figure 13 supports also IPv6 IP addresses. In general, IPv4 IP addresses have 4 bytes, *i.e.,* 32 bits. Accordingly, when using a memory having memory slots with 32 bits, a single memory slot may be used to store an IPv4 IP address. Conversely, IPv6 IP addresses have 16 bytes. Accordingly, when using a memory having memory slots with 32 bits, four memory slots are required to store an IPv6 IP address. In general, the number of memory slots used to store an IP address depends thus on the length of the IP address (4 bytes or 16 bytes) and the number of bits of the memory slots in the memories 48 and 50.

For example, in the embodiment shown in Figure 12, each slot RTEA in the memory 48 comprises:
- a single memory slot (having 32 bits) for storing a respective destination IP address IP_DA; and
- a single memory slot (having 32 bits) for storing further control data IP_DA_CNTRL associated with the slot RTEA, such as the previously mentioned enable field EN and the subnet mask SUBNET.

Similarly, in the embodiment shown in Figure 12, each slot RTEB in the memory 50 comprises:
- a single memory slot (having 32 bits) for storing a respective next-hop address IP_NH; and
- a single memory slot (having 32 bits) for storing further control data IP_NH_CNTRL associated with the slot RTEB, such as the previously mentioned next-hop enable field and the field specifying a communication interface 40.

Accordingly, in the embodiment considered, the memory 48 may store data IP_DA0 to IP_DA(N-1) for the N destination IP addresses, and data IP_DA0_CNTRL to IP_DA(N-1)_CNTRL for the respective control data, *i.e*., the memory 48 has at least 8 · N bytes of space, which may be divided into NB memory banks 48₁ to 48_{NB}. Similarly, the memory 50 may store data IP_NH0 to IP_NH(N-1) for the N next-hop addresses, and data IP_NH0_CNTRL to IP_NH(N-1)_CNTRL for the respective control data, *i.e.,* also the memory 50 has at least 8 · N bytes of space and may be implemented with a single memory bank. Accordingly, when using IPv4 addresses with a 32-bit memory, a total of four memory slots are occupied by the data of each routing table entry RTE (two memory slots in the memory 48 for the data RTEA and two memory slots in the memory 50 for the data RTEB).

For example, the memory controller 42 may perform an address translation operation, wherein the data IP_DA0 start at a given start address and the following addresses are mapped to the data IP_DA1 to IP_DA(N-1). Following addresses may then be mapped sequentially to the data IP_DA0_CNTRL to IP_DA(N-1)_CNTRL, the data IP_NH0 to IP_NH(N-1) and the data IP_NH0_CNTRL to IP_NH(N-1)_CNTRL. Accordingly, in the embodiment considered:
- the group of data IP_DA0 to IP_DA(N-1) have associated a first address subrange;
- the group of data IP_DA0_CNTRL to IP_DA(N-1)_CNTRL have associated a second address subrange;
- the group of data IP_NH0 to IP_NH(N-1) have associated a third address subrange; and
- the group of data IP_NH0_CNTRL to IP_NH(N-1)_CNTRL have associated a fourth address subrange.

In general, a given group of data may follow immediately the previous group of data or the address map may have a gap between the respective address subranges. In various embodiments, the groups of data may also have a different order.

Conversely, in the embodiment shown in Figure 13, each slot RTEA in the memory 48 comprises:
- four memory slots IP_DA_W0 to IP_DA_W3 for storing a respective destination IP address IP_DA; and
- a single memory slot for storing further control data IP_DA_CNTRL associated with the slot RTEA, such as the previously mentioned enable field EN and the subnet mask SUBNET.

Similarly, in the embodiment shown in Figure 13, each slot RTEB in the memory 50 comprises:
- four memory slots IP_NH_W0 to IP_NH_W3 for storing a respective next-hop address IP_NH; and
- a single memory slot for storing further control data IP_NH_CNTRL associated with the slot RTEB, such as the previously mentioned next-hop enable field and the field specifying a communication interface 40.

Accordingly, in the embodiment considered, the memory 48 may store data IP_DA_W0 to IP_DA_W3 for each of the N destination IP addresses IP_DA0 to IP_DA(N-1), and data IP_DA0_CNTRL to IP_DA(N-1)_CNTRL for the respective control data, *i.e.,* the memory 48 has at least 20 · N bytes of space, wherein the respective records RTE may be stored into NB memory banks 48₁ to 48_{NB}. Similarly, the memory 50 may store data IP_NH_W0 to IP_NH_W3 for each of the N next-hop addresses IP_NH0 to IP_NH(N-1), and data IP_NH0_CNTRL to IP_NH(N-1)_CNTRL for the respective control data, *i.e.,* also the memory 50 has at least 20 · N bytes of space and may be implemented with a single memory bank. Accordingly, when supporting IPv6 addresses with a 32-bit memory, a total of ten memory slots are occupied by the data of each routing table entry RTE (five memory slots in the memory 48 for the data RTEA and five memory slots in the memory 50 for the data RTEB).

For example, the memory controller 42 may perform an address translation operation, wherein the data IP_DA0_W0 of the first destination IP address IP_DA0 start at a given start address and the following addresses are mapped to the other data words IP_DA0_W1 to IPDA0_W3 of the first destination IP address IP_DA0, and similarly to the data words IP_DA_WO to IP_DA_W3 of the following destination IP address IP_DA1 to IP_DA(N-1). The following addresses are then mapped sequentially to the data IP_DA0_CNTRL to IP_DA(N-1)_CNTRL, the data words IP_NH_W0 to IP_NH_W3 of the next-hop addresses IP_NH0 to IP_NH(N-1), e.g., data words IP_NH0_W0 and the data IP_NH0_CNTRL to IP_NH(N-1)_CNTRL. Thus, also in this case, the address range is organized in four groups for the data IP_DA, IP_DA_CNTRL, IP_NH and IP_NH _CNTRL.

In both cases, the control data IP_DA_CTRL may comprise, in addition to the entry enable/valid bit EN, a field SUBNET for specifying the subnet mask of the address. The length of this field may be application dependent. For example, the inventors have observed that for typical applications the field SUBNET may have:
- in case only IPv4 addresses are supported, 6 bits for indicating an IPv4 subnet;
- in case also IPv6 addresses are supported, 8 bits for indicating an IPv6 prefix.

For example, in case of IPv4 addresses, the respective value stored to the field SUBNET may indicate an integer value corresponding to the number of Most Significant Bits (MSB) of the address IP_DA which are held valid, and the remaining Least Significant Bits (LSB) of the address IP_DA may be masked for determining the respective destination IP address range of the routing table entry. For example, the binary values "011000" of the field SUBNET may indicate the subnet "/24", which corresponds to a netmask of "255.255.255.0".

Conversely, the control data IP_NH_CTRL may comprise, in addition to the next-hop enable field NH_EN, a field DST_PORT for specifying a communication interface/network port 40 to be used to transmit the IP packet. The length of this field depends on the number of supported (physical or virtual) communication interfaces 40. For example, in various embodiments, the field DST_PORT may have 6 bits, which permits to support up to 64 (physical or virtual) communication interfaces 40.

Accordingly, in the embodiments considered, the memory controller 42 may be configured to implement an address translation and provide an address range, which is addressable by one or more of the processing cores 102 of the processing system 10. Those of skill in the art will appreciate that the address map of the memory controller 42 may also be organized differently. For example, the data IP_DA, IP_DA_CTRL, IP_NH and IP_NH_CTRL of a given routing table entry RTE may have consecutive addresses.

Accordingly, the processing core 102 may use the address map provided by the memory controller 42 in order to access via software instructions the memory slots of the memories 48 (in particular the respective memory banks 48₁ to 48_{NB}) and 50. As mentioned before, indeed the various memory slots described with respect to Figures 12 and 13 may be stored in a different order to the memories 48 and 50. For example, the memory locations IP_DA and IP_DA_CNTRL associated with a given record RTEA may be stored to consecutive memory locations in the same memory bank 48₁ to 48_{NB}, wherein consecutive records RTEA may be stored sequentially to different memory banks 48₁ to 48_{NB}. Conversely, the memory locations IP_NH and IP_NH_CNTRL associated with a given record RTEB may be stored to consecutive memory locations in the memory 50, wherein consecutive records RTEB may be stored sequentially to the memory 50.

Accordingly, a processing core 102 and/or another processing system 10 may be configured to implement a routing algorithm, such as Open Shortest Path First (OSPF) or Border Gateway Protocol (BGP), thereby defining the content of the routing table entries RTE and the respective order. Next, the processing core 102 and/or the other processing system 10 may determine the respective records RTEA and RTEB and store the respective data to the memories 48 (memories 48₁ to 48_{NB}) and 50 by using the address map provided by the memory controller 42.

Specifically, as will be described in greater detail in the following, in various embodiments, the processing core 102 (or another master circuit connected to the communication system 114) may read or write the content of the memories 48 and 50 by sending a read or write request to the communication system 114, wherein the request comprises an address of a sub-range managed by the communication interface 46. Thus, the address map of the physical address range of the communication system 114 may also be different from the address map provided by the address translation circuit. For example, in various embodiments, the address map of the translation circuit starts at 0, while the slave interface 46 may have associated an address range starting at a given start address/offset and having a dimension corresponding to the dimension of the address map provided by the circuit. Accordingly, in this case, the slave interface 46 may receive a request and generate the address ADDR provided to the address translation circuit by removing the start address/offset from the address received with the request.

In addition to or as alternative to a slave interface, the interface 46 may also comprise an integrated DMA controller, whereby the processing core 102 may program the routing table by storing the respective data to the memory 104b and the integrated DMA controller may automatically transfer the routing table from the memory 104b to the address translation circuit 424.

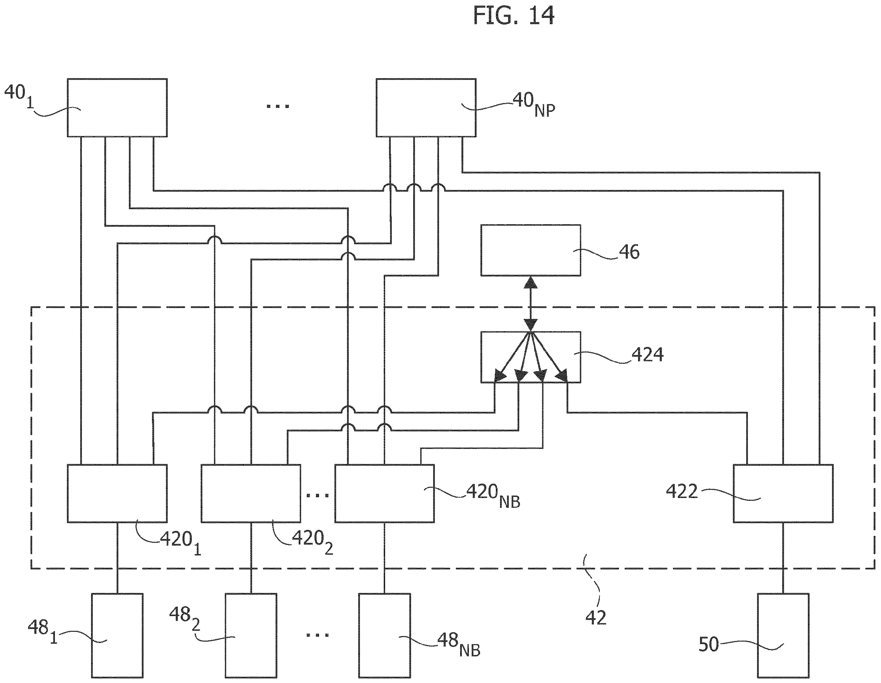

Figure 14 shows a possible embodiment of the memory controller 42. As described in the foregoing, in various embodiments, the memory controller 42 manages the access of the communication interfaces 40₁ to 40_{NP} to the memory banks 48₁ to 48_{NB} and 50.

Specifically, as described in the foregoing, in various embodiments, each communication interface 40 comprises a respective search engine 400, which comprises a plurality of NB search circuits 400₁ to 400_{NB}. Accordingly, each communication interface 40/search engine 400 generates NB sets of control signals for performing in parallel read operations from the NB memory banks 48₁ to 48_{NB}. Specifically, the first sets of control signals generated by the first search circuits 400₁ of the communication interfaces 40₁ to 40_{NP} are provided to a first arbiter 420₁, which selects a search circuit 400₁ permitted to access the first memory bank 48₁. Similarly, the second sets of control signals generated by the second search circuits 400₂ of the communication interfaces 40₁ to 40_{NP} are provided to a second arbiter 420₂, which selects a search circuit 400₂ permitted to access the first memory bank 48₂. The same connections are also applied for the other control signals, e.g., the last sets of control signals generated by the last search circuits 400_{NB} of the communication interfaces 40₁ to 40_{NP} are provided to a last arbiter 420_{NB}, which selects a search circuit 400_{NB} permitted to access the last memory bank 48_{NP}.

Similarly, in various embodiments, each communication interface 40/search engine 400 generates a further set of control signals for performing a read operation from the memory bank 50. In general, these further control signals may be generated directly by each search circuit 400₁ to 400_{NB} of a given search engine 400 or a shared circuit of the search engine 400. Accordingly, the further sets of control signals generated by the communication interfaces 40₁ to 40_{NP} are provided to a further arbiter 422, which selects a communication interface 40₁ to 40_{NP} permitted to access the memory bank 50. For example, the arbiters 420₁ to 420_{NP} and 422 may implement a round-robin arbitration.

As described in the foregoing, in various embodiments, the memory controller 42 manages also the access of the communication interface 46 (connected to the communication system 114) to the memory banks 48₁ to 48_{NB} and 50. In this respect, as described with respect to Figures 12 and 13, the memory controller 42 may comprise an address translation circuit 424 configured to translate an address of the interface circuit 46 into an address of one of the memory banks 48₁ to 48_{NB} and 50, i.e., the address translation circuit 424 comprises also a dispatcher circuit configured to generate control signals for reading or writing each of the memory banks 48₁ to 48_{NB} and 50. Accordingly, also these control signals may be provided to the respective arbitration circuits 420₁ to 420_{NB} and 422, e.g., the control signals generate by the address translation circuit 424 for accessing the memory bank 48₁ are provided to the arbiter 420₁, and the control signals generate by the address translation circuit 424 for accessing the memory bank 50 are provided to the arbiter 422.

In various embodiments, instead of providing the signals of the dispatcher circuit 424 to the arbiters 420₁ to 420_{NB} and 422, the memories 48 and 50 are implemented with dual port memories, and the arbiters 420₁ to 420_{NB} and 422 (and thus the search circuits 400) may access a first memory port, and the dispatcher circuit 424 may access a second memory port of the respective memory.

Specifically, while the communication interfaces 40₁ to 40₂ are preferably configured to perform only read requests (and not write requests) to the memory banks 48₁ to 48_{NB} and 50, the communication interface 46 is configured to perform (via the address translation circuit 424) at least write request (and preferably also read requests) to the memory banks 48₁ to 48_{NB} and 50. In this respect, in various embodiments, the communication interface 46 is a slave interface connected to the communication system 114 of the processing system 10. Accordingly, such a slave interface 46 may receive read or write request from any master interface connected to the communication system 114, such as a processing core 102 or a DMA controller 110. In general, the slave interface 46, the various master interfaces and/or the communication system 114 may also implement an access protection in order to limit read or write access to the addresses in the address map provided by the circuit 424 (and accordingly to the memory banks 48₁ to 48_{NB} and 50).

Accordingly, in the embodiment considered, the routing table memory controller 42, is used to arbitrate the access requests to the shared routing table stored to the memory banks 48₁ to 48_{NB} and 50, that can concurrently arrive from the communication interfaces 40₁ to 40_{NP} and from another circuit (external to the network accelerator 4) via the communication/programming interface 46 (e.g., an AXI slave). The search engines 400₁ to 400_{NB} inside each communication interface/network port 40₁ to 40_{NP} preferably can generate only read access requests during the lookup process, while the programming interface 46 may generate both read and write requests to the memory banks 48₁ to 48_{NB} and 50.

Specifically, in the embodiment considered, each memory bank 48₁ to 48_{NB} and 50 has associated a respective arbitration circuit 420₁ to 420_{NB} and 422, which are configured to arbiters the incoming access requests, e.g., by using a round-robin scheduling algorithm.

Concerning the interface 46, an address translation and dispatcher circuit 424 is configured to manage an address map (see Figures 12 or 13) and forwards the read/write access requests received from the interface 46 to one of the memory banks 48₁ to 48_{NB} and 50 according to the value of address bits provided by the interface 46. In this respect, the interface 46 (and the communication system 114) may use a given number of data bits, which may correspond or not correspond to the data width of the memory banks 48₁ to 48_{NB} and 50. For example, in case the memory has less bits, the dispatcher 424 may indeed generate a plurality of read or write request in order to exchange data between the memory bank 48₁ to 48_{NB} and 50, and the interface 46.

In various embodiments, the address translation operation (circuit 424) is only implemented for the access via the interface 46, while the search circuits 400₁ to 400_{NB} access the memories by using directly the addresses of the respective memory slots. In fact, each search circuit 400₁ to 400_{NB} should only access a respective memory bank 48₁ to 48_{NB}.

In the following will now be described in greater detail possible embodiments of the operations of the slave interface 46 and the address translation and dispatcher circuit 424.

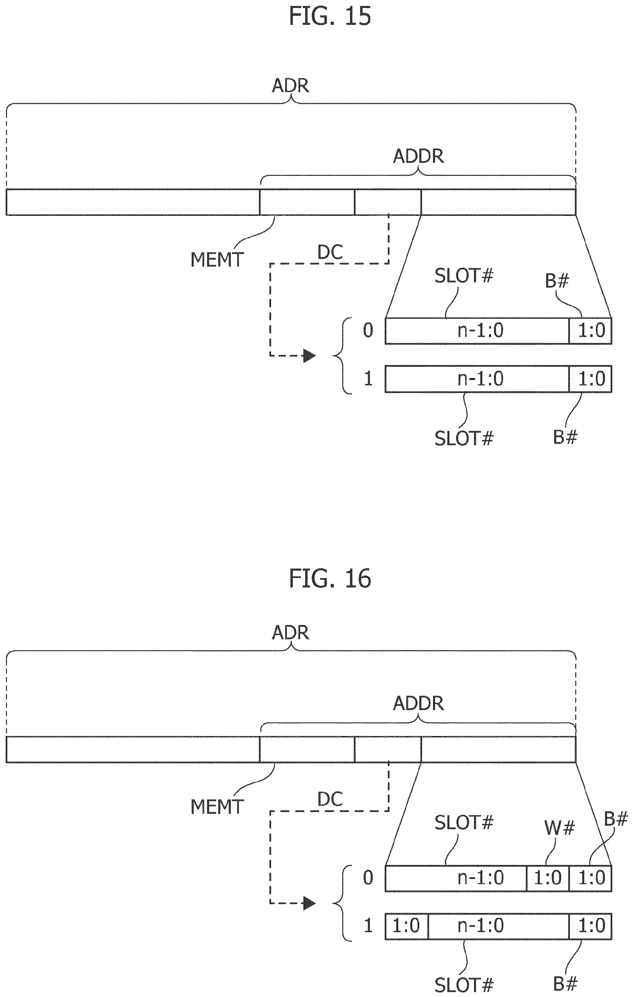

Specifically, Figures 15 and 16 shows the organization of the address field ADR of a (read or write) request exchanged via the communication system 114, such as an address ADR having 32 bits.

Specifically, in the embodiment considered, a given number n of LSB bits of the address ADR correspond to the address ADDR to be provided to the dispatcher circuit 424. Accordingly, the remaining MSB bits may be used to identify the interface 46 within the communication system 114.

In the embodiment considered, a first bit MEMT of the address ADDR, preferably the MSB bit of the address ADDR, indicates the memory type, i.e., whether to access the memory 48 (e.g., MEMT = "0") or the memory 50 (e.g., MEMT = "1"). Moreover, a second bit DC indicates whether to access the data section (e.g., DC = "0"), i.e., the slots IP_DA or IP_NH, or the control section (e.g., DC = "1"), i.e., the slots IP_DA_CNTRL or IP_NH_CNTRL, of the respective memory. Finally, a field SLOT# indicates the respective slot number. Accordingly, when N slots have to be supported, the field SLOT# has at least n = log₂(N) bits, e.g., bits SLOT#[n-1:0]

Specifically, as shown in Figure 15, when only IPv4 addresses are supported and the communication system 114 and the memories 48 and 50 have a data width of 32-bits, the above information are sufficient in order to identify a given memory location (as also shown in Figure 12).

Conversely, as shown in Figure 16, when also IPv6 addresses are supported and the communication systems and the memories 48 and 50 have a data width of 32-bits, an additional field W# is required in case of an access to the data section, e.g., when DC = "0", in order to specify one of the sub-words IP_DA_W0 to IP_DA_W3 of the respective slot. Conversely, the respective data (W#) are not required for the control section, e.g., when DC = "1" (see also Figure 13). A similar field W# may thus be used when a given field IP_DA, IP_DA_CNTRL, IP_NH or IP_NH_CNTRL is stored to a plurality of memory slots in the respective memory.

In various embodiments, the address field ADDR may also comprise a byte index B#. For example, this byte index B# may be useful in order to permit just a programming of single bytes in the memories 48 and 50. For example, when the memories 48 and 50 have 32 bits, the field B# may have two bits and indicate one of the 4 bytes of a respective memory slot indicated by the other address data ADDR. In general, the byte index B# may be used when the communication system 114 has a data width being smaller than the data width of the memories 48 and 50, or in order to ensure that only single bytes may be programmed.

Thus, in various embodiments, the (word) index W# may be used to select a given word of the selected record slot SLOT#, and the byte index B# may be used to select a given byte in the selected memory slot as indicated by the data SLOT# and W#.

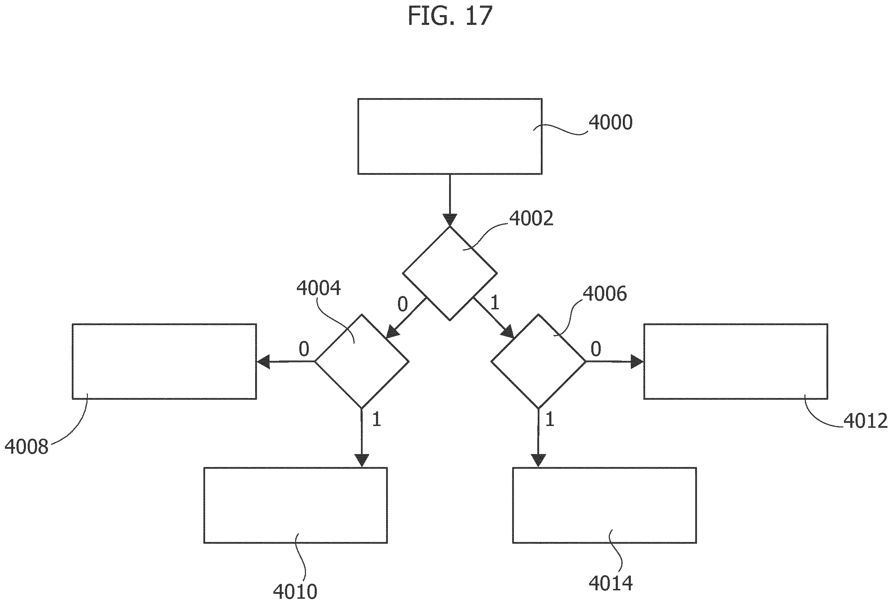

Figure 17 shows an embodiment of the address translation implemented in the dispatcher circuit 424.

Specifically, once the address translation circuit 424 receives at a step 4000 a (read or write) request comprising a given address ADDR in the address map of the dispatcher circuit 424, the address translation circuit 424 determines whether the received address ADDR is associated with the memory 48 or the memory 50.

For example, in the embodiments shown in Figures 12 and 13, the first half of addresses is associated with the memory 48 and the second half of addresses is associated with the memory 50. Accordingly, in this case, the dispatcher circuit 424 may compare the received address ADDR with a threshold corresponding to the address associated with the last slot in the memory 48 or the address associated with the first slot in the memory 50, such as the address of the memory slot IP_NH0_W0. For example, in various embodiments, the address translation circuit 424 is configured to:
- select the memory 48, when the address ADDR is smaller than the threshold; and
- select the memory 50, when the address ADDR is equal to or greater than the threshold.

Optionally, the address translation circuit 424 may compare the received address ADDR with a lower threshold corresponding to the address associated with the first slot in the memory 48 (e.g., corresponding to the address of the memory slot IP_DA0_W0) and/or with an upper threshold corresponding to the address associated with the last slot in the memory 50 (e.g., corresponding to the address of the memory slot IP_NH(N-1)_CNTRL).

Conversely, in the embodiments shown in Figures 15 and 16, the separation into two half-ranges is implicit via the use of the memory type bit MEMT. Accordingly, in this case, the address translation circuit 424 may verify the value of the memory type bit MEMT.

Accordingly, in case the address ADDR is associated with the memory 48 (as schematically shown via an output "0" of the step 4002), the dispatcher circuit 424 proceeds to a verification step 4004.

Specifically, the step 4004 is purely optional and is used in case different address translation operations are required for the destination IP addresses IP_DA and the control data IP_DA_CNTRL. In fact, in the embodiment considered, the address translation circuit 424 determines whether the received address ADDR is associated with a destination IP address IP_DA or control data IP_DA_CNTRL. For example, in the embodiments shown in Figures 12 and 13, the first part of addresses is associated with the destination IP addresses IP_DA and the second part of addresses is associated with the control data IP_DA_CNTRL. Accordingly, in this case, the address translation circuit 424 may compare the received address ADDR with a threshold corresponding to the address associated with the last slot associated with data IP_DA or the address associated with the first slot associated with control data IP_DA_CTRL, such as the address of the memory slot IP_DA0_CNTRL. For example, in various embodiments, the address translation circuit 424 is configured to:
- select the slots for the data IP_DA, when the address ADDR is smaller than the threshold; and
- select slots for the control data IP_DA_CNTRL, when the address ADDR is equal to or greater than the threshold.

Conversely, in the embodiments shown in Figures 15 and 16, the separation into the data or control section is explicit via the used of the bit DC. Accordingly, in this case, the address translation circuit 424 may verify the value of the bit DC.

Accordingly, in case the address ADDR is associated with data IP_DA (as schematically shown via an output "0" of the step 4004), the address translation circuit 424 proceeds to a step 4008, where the address translation circuit 424 applies the address translation operation in order to access the data IP_DA in the memory 48.

For example, as described in the foregoing, the field SLOT# may indicate a given record slot, and optionally the index W# may indicate a respective data word of the record. Specifically, by storing the records RTEA in an interleaved manner to the memories 48₁ to 48_{NB}, a given number nb = log₂(NB) of LSB bits of the field SLOT# may be used to select one of the memory banks 48₁ to 48_{NB}, and the remaining bits of the field SLOT# may be used to select a respective record slot in the selected memory bank 48₁ to 48_{NB}. Specifically, as described with respect to Figures 12 and 15, in case of IPv4 addresses and 32-bit memories, each memory slot already corresponds to the respective record slot. Conversely, as described with respect to Figures 13 and 16, in case of IPv6 addresses and 32-bit memories, the additional field W# may be used to select the respective memory slot of the record, i.e., the combination of the fields SLOT# and W# indicate the address within the selected memory bank 48₁ to 48_{NB}.

Conversely, in case the address ADDR is associated with control data IP_DA_CTRL (as schematically shown via an output "1" of the step 4004), the address translation circuit 424 proceeds to a step 4010, where the address translation circuit 424 applies the address translation operation in order to access the control data IP_DA_CTRL in the memory 48.

For example, as described in the foregoing, the field SLOT# may indicate a given record. Specifically, by storing the slots in an interleaved manner to the memories 48₁ to 48_{NB}, a given number nb = log₂(NB) of LSB bits of the field SLOT# may again be used to select one of the memory banks 48₁ to 48_{NB}, and the remaining bits of the field SLOT# may be used to select a respective record slot in the selected memory bank 48₁ to 48_{NB}. Specifically, as described in the foregoing, preferably the control data IP_DA_CTRL use only a single memory slot. Accordingly, both for IPv4 and IPv6, each memory slot may already correspond to the respective record slot of control data IP_DA_CNTRL, i.e., the field W# may be omitted for the control data IP_DA_CTRL.

Conversely, in case the address ADDR is associated with the memory 50 (as schematically shown via an output "1" of the step 4002), the address translation circuit 424 proceeds to a verification step 4006.

Specifically, also the step 4006 is purely optional and is used in case different address translation operations are required for the next-hop addresses IP_NH and the control data IP_NH_CNTRL. In fact, in the embodiment considered, the address translation circuit 424 determines whether the received address ADDR is associated with a next-hop addresses IP_NH or control data IP_NH_CNTRL. For example, in the embodiments shown in Figures 12 and 13, the first part of addresses is associated with the next-hop addresses IP_NH and the second part of addresses is associated with the control data IP_NH_CNTRL. Accordingly, in this case, the address translation circuit 424 may compare the received address ADDR with a threshold corresponding to the address associated with the last slot associated with data IP_NH or the address associated with the first slot associated with control data IP_NH_CTRL, such as the address of the memory slot IP_NH0_CNTRL. For example, in various embodiments, the address translation circuit 424 is configured to:
- select the slots for the data IP_NH, when the address ADDR is smaller than the threshold; and
- select slots for the control data IP_DA_CNTRL, when the address ADDR is equal to or greater than the threshold.

Again, in the embodiments shown in Figures 15 and 16, the separation into the data or control section is explicit via the used of the bit DC. Accordingly, in this case, the address translation circuit 424 may verify the value of the bit DC.

Accordingly, in case the address ADDR is associated with data IP_NH (as schematically shown via an output "0" of the step 4006), the address translation circuit 424 proceeds to a step 4012, where the address translation circuit 424 applies the address translation operation in order to access the data IP_NH in the memory 50.

For example, as described in the foregoing, the field SLOT# may indicate a given record, and optionally the field W# may indicate a given word in the record. Specifically, by storing the slots sequentially to the memory 50, the field SLOT# may be used to select a respective record slot in the memory 50. Specifically, in case of IPv4 addresses and 32-bit memories, each memory slot again corresponds to the respective record slot. Conversely, as described with respect to Figures 13 and 16, in case of IPv6 addresses and 32-bit memories, an additional field W# may be used to select the respective memory slot of the record, i.e., the combination of the fields SLOT# and W# indicate the address within the memory 50.

Conversely, in case the address ADDR is associated with control data IP_NH_CTRL (as schematically shown via an output "1" of the step 4006), the address translation circuit 424 proceeds to a step 4014, where the address translation circuit 424 applies the address translation operation in order to access the control data IP_NH_CTRL in the memory 50.

For example, as described in the foregoing, the field SLOT# may indicate a given record. Specifically, by storing the slots sequentially to the memory 50 the field SLOT# may be used to select a respective record slot in the memory 50. Specifically, as described in the foregoing, preferably the control data IP_DA_CTRL use only a single memory slot. Accordingly, both for IPv4 and IPv6, each memory slot may already correspond to the respective record slot of control data IP_NH_CNTRL.

As described in the foregoing, in various embodiments, the dispatcher circuit may also support the byte index B#. For example, this byte index may be used to select a given bytes of a selected memory slot, as indicated by the field SLOT# and optionally W#.

In various embodiments, the slots of the memories 48 and 50 may also have less bits than the data width of the communication system 114. In this case, the dispatcher 424 may be configured to automatically generate a plurality of read or write requests. For example, such multiple read or write requests may access automatically consecutive memory locations in the same memory. Moreover, in case of the memory 48, such multiple read or write requests may also access in parallel respective memory banks 48₁ to 48_{NB}.

In various embodiments, the control data IP_DA_CNTRL and/or IP_NH_CNTRL may also comprise further data. For example, in various embodiments, the control data IP_DA_CNTRL and/or IP_NH_CNTRL comprise additional Error Correction Code (ECC) data. For example, the ECC data included in the data IP_DA_CNTRL may be calculated according to a given ECC scheme (at least) based on the data IP_DA and SUBNET. Similarly, the ECC data included in the data IP_NH _CNTRL may be calculated according to a given ECC scheme (at least) based on the data IP_NH, NH _EN and DST_PORT. For example, in various embodiments is used a Single-Error-Correction and Double-Error-Detection (SECDED) code.

For example, such an arrangement is particularly useful, e.g., in case of ASIL-B compliant processing systems, because the memory controller 42 and/or the search engines 400 may verify the correctness of the data stored to the memories 48 and 50 without any intervention of a processing core 102. For example, in case of a fault is detected (such as an uncorrectable error, such as a double-bit error), the memory controller 42 and/or the respective search engine 400 may signal the error to a fault collection and error management circuit of the processing system 10, which may signal the error to the one or more processing cores 102 and/or to a pad or pin of the integrated circuit of the processing system 10.

Accordingly, in the solutions described in the foregoing, the organization of the routing table data permits a fast lookup of a destination IP address within an IP routing table, without relying on slow software-based lookups or complex and expansive Ternary Content Addressable Memories (TCAM). For this purpose, the proposed solutions may perform a parallel search by accessing in parallel a plurality of memory banks 48₁ to 48_{NB} having stored the principal data of the search operation. In fact, in various embodiments, the routing table data are split and stored to two different memories 48 and 50, whose content is optimized for the routing operations executed in HW. This separation permits that the memory 48 contains (only) the data useful for detecting a match of the destination **IP** address in the specified destination **IP** ranges, while the other data specifying the respective route (e.g., next-hop, egress interface index, etc.) may be stored in a single memory bank 50, whose content is retrieved only after a match is found.

Accordingly, the disclosed solutions permit a fast lookup process that does not significantly delay the packet transmission, thereby achieving high data rates and low latencies.

Of course, without prejudice to the principle of the invention, the details of construction and the embodiments may vary widely with respect to what has been described and illustrated herein purely by way of example, without thereby departing from the scope of the present invention, as defined by the ensuing claims.

## Claims

1. A processing system comprising a hardware network accelerator (4), a microprocessor (1020) and a communication system (114, 1022, 46, 110, 104b) connecting said microprocessor (1020) to said hardware network accelerator (4), wherein said hardware network accelerator (4) comprises a plurality, NP, of Ethernet communication interfaces (40₁-40_{NP}) and a plurality, NB, of memories (48₁-48_{NB});
**characterized in that** said hardware network accelerator (4) comprises a further memory (50), wherein each of said plurality, NB, of memories (48₁-48_{NB}) is configured to store a plurality of records (RTEA), each record (RTEA) comprising:
- enable data (EN) indicating whether the respective record (RTEA) contains valid data,
- destination IP data (IP_DA, SUBNET) identifying a destination IP address range;
wherein said further memory (50) is configured to store a plurality of further records (RTEB), wherein each record (RTEA) is associated univocally with a respective further record (RTEB), and wherein each further record (RTEB) comprises:
- next-hop data (IP_NH) indicating a next-hop IP address,
- next-hop enable data (IP_NH) indicating whether a respective destination IP address range may be reached directly or via the respective next-hop IP address,
- network port data (DST_PORT) indicating one of said plurality, NP, of Ethernet communication interfaces;
wherein each Ethernet communication interface (40₁-40_{NP}) is configured to:
- obtain an IP packet comprising a destination IP address,
- access in parallel (400₁-400_{NB}) said plurality, NB, of memories (48₁-48_{NB}) in order to sequentially read at least in part the records (RTEA) stored to each of said plurality, NB, of memories (48₁-48_{NB}),
- compare said destination IP address with the destination IP data (IP_DA, SUBNET) of the read records (RTEA) containing valid data in order to select a record (RTEA) having a destination IP address range containing said destination IP address,
- read the further record (RTEB) associated with said selected record (RTEA) from said further memory (50), and
- select one of said Ethernet communication interfaces (40₁-40_{NP}) based on said network port data (DST_PORT) of said read further record (RTEB);
wherein said selected Ethernet communication interface (40₁-40_{NP}) is configured to:
- determine a target IP address by selecting:
a) said destination IP address when the next-hop enable data (IP_NH) of said read further record (RTEB) indicate that the respective destination IP address range may be reached directly, or
b) the next-hop IP address of said read further record (RTEB) when the next-hop enable data (IP_NH) of said read further record (RTEB) indicate that the respective destination IP address range may be reached via the respective next-hop IP address,
- determine a target Media Access Control, MAC, address for said target IP address,
- generate an Ethernet frame comprising an Ethernet header (E_H) and as payload said IP packet, wherein said Ethernet header (E_H) comprises as destination MAC address said target MAC address and a source MAC address configured for the respective Ethernet communication interface (40₁-40_{NP}), and
- transmit said Ethernet frame to an Ethernet network (20) connected to the selected Ethernet communication interface (40₁-40_{NP}); and
wherein said microprocessor (1020) is adapted to program said records (RTEA) in said plurality, NB, of memories (48₁-48_{NB}) and said further records (RTEB) in said further memory (50).

2. The processing system according to Claim 1, wherein each record (RTEA) comprises:
- a first data section (IP_DA) comprising a destination IP address included in the respective destination IP address range, and
- a first control data section (IP_DA_CNTRL) comprising said enable data (EN) and a field (SUBNET) for storing a subnet or network mask for the respective destination IP address range; and
wherein each further record (RTEB) comprises:
- a second data section (IP_NH) comprising said next-hop IP address, and
- a second control data section (IP_NH_CNTRL) comprising said next-hop enable data (IP_NH) and said network port data (DST_PORT).

3. The processing system according to Claim 1 or Claim 2, wherein said hardware network accelerator (4) comprises an address translation and dispatcher circuit (424) configured to manage an address map, wherein each memory location in said plurality, NB, of memories (48₁-48_{NB}) and each memory location in said further memory (50) is associated with a respective memory address in said address map, wherein said address translation and dispatcher circuit (424) is configured:
- receive a memory write request comprising a memory address (ADDR) in said address map and respective data to be stored,
- select one of said plurality, NB, of memories (48₁-48_{NB}) and said further memory (50) based on said received memory address (ADDR),
- select a memory location of the selected memory based on said received memory address (ADRR), and
- store said data to be stored to the selected memory location of the selected memory.

4. The processing system according to a combination of Claims 2 and 3, wherein said memory address (ADDR) comprises a first field (MEMT), a second field (SLOT#) and a third field (DC),
wherein said first field (MEMT) indicates whether the received data should be stored to said plurality, NB, of memories (48₁-48_{NB}) or said further memory (40);
wherein, when said first field (MEMT) indicates that the received data should be stored to said plurality (NB) of memories (48₁-48_{NB}), said second field (SLOT#) indicates a record (RTEA) in said plurality, NB, of memories (48₁-48_{NB}), and said third field (DC) indicates whether the received data should be stored to the first data section (IP_DA) or the first control data section (IP_DA_CNTRL) of the record (RTEA) indicated by said second field (SLOT#); and
wherein, when said first field (MEMT) indicates that the received data should be stored to said further memory (50), said second field (SLOT#) indicates a further record (RTEB) in said further memory (50), and said third field (DC) indicates whether the received data should be stored to the second data section (IP_NH) or the second control data section (IP_NH_CNTRL) of the further record (RTEB) indicated by said second field (SLOT#).

5. The processing system according to Claim 4, wherein at least one of said first data section (IP_DA), said first control data section (IP_DA_CNTRL), said second data section (IP_NH) and said second control data section (IP_NH_CNTRL) is stored to a plurality of memory slots in the respective memory, and wherein said memory address (ADDR) comprises a fourth field (W#) indicating a respective memory slot of the respective plurality of memory slots.

6. The processing system according to Claim 4 or Claim 5, wherein each memory location of said plurality, NB, of memories (48₁-48_{NB}) and said further memory (40) comprises a plurality of bytes, and wherein said memory address (ADDR) comprises a fifths field (B#) indicating a sub-set of the bytes of the memory slot indicated by said first field (MEMT), said second field (SLOT#), said third field (DC), and optionally said fourth field (W#).

7. The processing system according to any of Claims 3 to 6, wherein said communication system (114, 1022, 46, 110, 104b) comprises a slave communication interface (46) associated with said hardware network accelerator (4), wherein said communication system (114, 1022, 46, 110, 104b) has a physical address range having a physical address sub-range associated with said slave communication interface (46), wherein said slave communication interface (46) is configured to:
- receive a write request from said microprocessor (1020), said write request comprising an address (ADR) in said physical address sub-range and respective transmitted data;
- extract a memory address (ADDR) in said address map of said address translation and dispatcher circuit (424) from said address (ADR) in said physical address sub-range; and
- provide a memory write request to said address translation and dispatcher circuit (424), said memory write request comprising said extracted memory address (ADDR) and said transmitted data.

8. The processing system according to any of the previous claims, wherein each Ethernet communication interface (40₁-40_{NP}) comprises a search engine (400) comprising a plurality of search circuits (400₁-400_{NB}), wherein each search circuit (400₁-400_{NB}) is configured to:
- access a respective memory of said plurality, NB, of memories (48₁-48_{NB}) in order to sequentially read at least in part the records (RTEA) stored to the respective memory of said plurality, NB, of memories (48₁-48_{NB}); and
- compare said destination IP address with the destination IP data (IP_DA, SUBNET) of the respective read records (RTEA) containing valid data in order to determine whether the record (RTEA) has a destination IP address range containing said destination IP address.

9. The processing system according to Claim 8, wherein each search circuit (400₁-400_{NB}) is configured to sequentially read the records (RTEA) stored to the respective memory of said plurality, NB, of memories (48₁-48_{NB}) until said enable data (EN) indicate that the respective record (RTEA) does not contain valid data or at least one of said search circuits (400₁-400_{NB}) determines that a record (RTEA) has a destination IP address range containing said destination IP address.

10. The processing system according to any of the previous claims, wherein said hardware network accelerator (4) comprises a memory controller (42) configured to decide, which of said Ethernet communication interfaces (40₁-40_{NP}) may access said plurality, NB, of memories (48₁-48_{NB}) and said further memory (50).

11. An integrated circuit comprising a processing system according to any of the previous claims.

12. A device, such as a vehicle, comprising a plurality of processing systems according to any of the previous claims, wherein said processing systems (10a) are connected to an Ethernet communication system (20).

13. A method of operating a processing system according to any of the previous claims 1 to 10, comprising:
- programming via the microprocessor (1020) of said processing system a plurality of records (RTEA) in the plurality, NB, of memories (48₁-48_{NB}) and respective further records (RTEB) in said further memory (50), wherein each record (RTEA) is associated univocally with a respective further record (RTEB), wherein each record (RTEA) comprises:
- enable data (EN) indicating whether the respective record (RTEA) contains valid data,
- destination IP data (IP_DA, SUBNET) identifying a destination IP address range;
and each further record (RTEB) comprises:
- next-hop data (IP_NH) indicating a next-hop IP address,
- next-hop enable data (IP_NH) indicating whether a respective destination IP address range may be reached directly or via the respective next-hop IP address,
- network port data (DST_PORT) indicating one of said plurality, NP, of Ethernet communication interfaces;
- providing an IP packet to one of said Ethernet communication interface (40₁-40_{NP}), whereby:
a) said Ethernet communication interface (40₁-40_{NP}):
- obtains an IP packet comprising a destination IP address,
- accesses in parallel (400₁-400_{NB}) said plurality, NB, of memories (48₁-48_{NB}) in order to sequentially read at least in part the records (RTEA) stored to each of said plurality, NB, of memories (48₁-48_{NB}),
- compares said destination IP address with the destination IP data (IP_DA, SUBNET) of the read records (RTEA) containing valid data in order to select a record (RTEA) having a destination IP address range containing said destination IP address,
- reads the further record (RTEB) associated with said selected record (RTEA) from said further memory (50), and
- selects one of said Ethernet communication interfaces (40₁-40_{NP}) based on said network port data (DST_PORT) of said read further record (RTEB); and b) said selected Ethernet communication interface (40₁-40_{NP}):
- determines a target IP address by selecting:
a) said destination IP address when the next-hop enable data (IP_NH) of said read further record (RTEB) indicate that the respective destination IP address range may be reached directly, or
b) the next-hop IP address of said read further record (RTEB) when the next-hop enable data (IP_NH) of said read further record (RTEB) indicate that the respective destination IP address range may be reached via the respective next-hop IP address,
- determines a target Media Access Control, MAC, address for said target IP address,
- generates an Ethernet frame comprising an Ethernet header (E_H) and as payload said IP packet, wherein said Ethernet header (E_H) comprises as destination MAC address said target MAC address and a source MAC address configured for the respective Ethernet communication interface (40₁-40_{NP}), and
- transmits said Ethernet frame to an Ethernet network (20) connected to the selected Ethernet communication interface (40₁-40_{NP}).

## Patentansprüche

1. Verarbeitungssystem, das einen Hardware-Netzwerkbeschleuniger (4), einen Mikroprozessor (1020) und ein Kommunikationssystem (114, 1022, 46, 110, 104b) umfasst, das den Mikroprozessor (1020) mit dem Hardware-Netzwerkbeschleuniger (4) verbindet, wobei der Hardware-Netzwerkbeschleuniger (4) eine Vielzahl, NP, von Ethernet-Kommunikationsschnittstellen (40₁-40_{NP}) und eine Vielzahl, NB, von Speichern (48₁-48_{NB}) umfasst;
**dadurch gekennzeichnet, dass** der Hardware-Netzwerkbeschleuniger (4) einen weiteren Speicher (50) umfasst, wobei jeder der Vielzahl, NB, von Speichern (48₁-48_{NB}) so konfiguriert ist, dass er eine Vielzahl von Datensätzen (RTEA) speichert, wobei jeder Datensatz (RTEA) Folgendes umfasst:
- Freigabedaten (EN), die angeben, ob der jeweilige Datensatz (RTEA) gültige Daten enthält,
- Ziel-IP-Daten (IP_DA, SUBNET), die einen Ziel-IP-Adressbereich identifizieren;
wobei der weitere Speicher (50) so konfiguriert ist, dass er eine Vielzahl von weiteren Datensätzen (RTEB) speichert, wobei jeder Datensatz (RTEA) eindeutig einem jeweiligen weiteren Datensatz (RTEB) zugeordnet ist, und wobei jeder weitere Datensatz (RTEB) Folgendes umfasst:
- Next-Hop-Daten (IP_NH), die eine Next-Hop-IP-Adresse angeben,
- Next-Hop-Freigabedaten (IP_NH), die angeben, ob ein jeweiliger Ziel-IP-Adressbereich direkt oder über die jeweilige Next-Hop-IP-Adresse erreicht werden kann,
- Netzwerkportdaten (DST_PORT), die eine der Vielzahl, NP, von Ethernet-Kommunikationsschnittstellen angeben;
wobei jede Ethernet-Kommunikationsschnittstelle (40₁-40_{NP}) für Folgendes konfiguriert ist:
- Erhalten eines IP-Pakets, das eine Ziel-IP-Adresse umfasst,
- paralleles Zugreifen (400₁-400_{NB}) auf die Vielzahl, NB, von Speichern (48₁-48_{NB}), um mindestens teilweise die in jeder Vielzahl, NB, von Speichern (48₁-48_{NB}) gespeicherten Datensätze (RTEA) sequenziell zu lesen,
- Vergleichen der Ziel-IP-Adresse mit den Ziel-IP-Daten (IP_DA, SUBNET) der gelesenen Datensätze (RTEA), die gültige Daten enthalten, um einen Datensatz (RTEA) auszuwählen, der einen Ziel-IP-Adressbereich aufweist, der die Ziel-IP-Adresse enthält,
- Lesen des weiteren Datensatzes (RTEB), der dem ausgewählten Datensatz (RTEA) zugeordnet ist, aus dem weiteren Speicher (50), und
- Auswählen einer der Ethernet-Kommunikationsschnittstellen (40₁-40_{NP}) basierend auf den Netzwerkportdaten (DST_PORT) des gelesenen weiteren Datensatzes (RTEB);
wobei die ausgewählte Ethernet-Kommunikationsschnittstelle (40₁-40_{NP}) für Folgendes konfiguriert ist:
- Bestimmen einer Ziel-IP-Adresse durch das Auswählen von:
a) der Ziel-IP-Adresse, wenn die Next-Hop-Freigabedaten (IP_NH) des gelesenen weiteren Datensatzes (RTEB) angeben, dass der jeweilige Ziel-IP-Adressbereich direkt erreicht werden kann, oder
b) der Next-Hop-IP-Adresse des gelesenen weiteren Datensatzes (RTEB), wenn die Next-Hop-Freigabedaten (IP_NH) des gelesenen weiteren Datensatzes (RTEB) angeben, dass der jeweilige Ziel-IP-Adressbereich über die jeweilige Next-Hop-IP-Adresse erreicht werden kann,
- Bestimmen einer Ziel-Media-Access-Control-Adresse (Ziel-MAC-Adresse) für die Ziel-IP-Adresse,
- Erzeugen eines Ethernet-Frames, der einen Ethernet-Header (E_H) und als Nutzlast das IP-Paket umfasst, wobei der Ethernet-Header (E_H) als Ziel-MAC-Adresse die Ziel-MAC-Adresse und eine für die jeweilige Ethernet-Kommunikationsschnittstelle (40₁-40_{NP}) konfigurierte Quell-MAC-Adresse umfasst, und
- Übertragen des Ethernet-Frames an ein Ethernet-Netzwerk (20), das mit der ausgewählten Ethernet-Kommunikationsschnittstelle (40₁-40_{NP}) verbunden ist; und wobei der Mikroprozessor (1020) dazu ausgelegt ist, die Datensätze (RTEA) in der Vielzahl, NB, von Speichern (48₁-48_{NB}) und die weiteren Datensätze (RTEB) in dem weiteren Speicher (50) zu programmieren.

2. Verarbeitungssystem nach Anspruch 1, wobei jeder Datensatz (RTEA) Folgendes umfasst:
- einen ersten Datenabschnitt (IP_DA), der eine Ziel-IP-Adresse umfasst, die in dem jeweiligen Ziel-IP-Adressbereich enthalten ist, und
- einen ersten Steuerdatenabschnitt (IP_DA_CNTRL), der die Freigabedaten (EN) und ein Feld (SUBNET) zum Speichern eines Subnetzes oder einer Netzwerkmaske für den jeweiligen Ziel-IP-Adressbereich umfasst; und
wobei jeder weitere Datensatz (RTEB) Folgendes umfasst:
- einen zweiten Datenabschnitt (IP_NH), der die Next-Hop-IP-Adresse umfasst, und
- einen zweiten Steuerdatenabschnitt (IP_NH_CNTRL), der die Next-Hop-Freigabedaten (IP_NH) und die Netzwerkportdaten (DST_PORT) umfasst.

3. Verarbeitungssystem nach Anspruch 1 oder Anspruch 2, wobei der Hardware-Netzwerkbeschleuniger (4) eine Adressübersetzungs- und Dispatcherschaltung (424) umfasst, die so konfiguriert ist, dass sie eine Adresskarte verwaltet, wobei jede Speicherstelle in der Vielzahl, NB, von Speichern (48₁-48_{NB}) und jede Speicherstelle in dem weiteren Speicher (50) einer jeweiligen Speicheradresse in der Adresskarte zugeordnet ist, wobei die Adressübersetzungs- und Dispatcherschaltung (424) für Folgendes konfiguriert ist:
- Empfangen einer Speicherschreibanforderung, die eine Speicheradresse (ADDR) in der Adresskarte und jeweilige zu speichernde Daten umfasst,
- Auswählen eines der Vielzahl, NB, von Speichern (48₁-48_{NB}) und des weiteren Speichers (50) basierend auf der empfangenen Speicheradresse (ADDR),
- Auswählen einer Speicherstelle des ausgewählten Speichers basierend auf der empfangenen Speicheradresse (ADRR), und
- Speichern der Daten, die auf der ausgewählten Speicherstelle des ausgewählten Speichers gespeichert werden sollen.

4. Verarbeitungssystem nach einer Kombination der Ansprüche 2 und 3, wobei die Speicheradresse (ADDR) ein erstes Feld (MEMT), ein zweites Feld (SLOT#) und ein drittes Feld (DC) umfasst,
wobei das erste Feld (MEMT) angibt, ob die empfangenen Daten in der Vielzahl, NB, von Speichern (48₁-48_{NB}) oder dem weiteren Speicher (40) gespeichert werden sollen; wobei, wenn das erste Feld (MEMT) angibt, dass die empfangenen Daten in der Vielzahl (NB) von Speichern (48₁-48_{NB}) gespeichert werden sollen, das zweite Feld (SLOT#) einen Datensatz (RTEA) in der Vielzahl, NB, von Speichern (48₁-48_{NB}) angibt, und das dritte Feld (DC) angibt, ob die empfangenen Daten in dem ersten Datenabschnitt (IP_DA) oder dem ersten Steuerdatenabschnitt (IP_DA_CNTRL) des Datensatzes (RTEA) gespeichert werden sollen, der durch das zweite Feld (SLOT#) angegeben wird; und
wobei, wenn das erste Feld (MEMT) angibt, dass die empfangenen Daten in dem weiteren Speicher (50) gespeichert werden sollen, das zweite Feld (SLOT#) einen weiteren Datensatz (RTEB) in dem weiteren Speicher (50) angibt, und das dritte Feld (DC) angibt, ob die empfangenen Daten in dem zweiten Datenabschnitt (IP_NH) oder dem zweiten Steuerdatenabschnitt (IP_NH_CNTRL) des weiteren Datensatzes (RTEB) gespeichert werden sollen, der durch das zweite Feld (SLOT#) angegeben wird.

5. Verarbeitungssystem nach Anspruch 4, wobei mindestens einer des ersten Datenabschnitts (IP_DA), des ersten Steuerdatenabschnitts (IP_DA_CNTRL), des zweiten Datenabschnitts (IP_NH) und des zweiten Steuerdatenabschnitts (IP_NH_CNTRL) in einer Vielzahl von Speicherplätzen im jeweiligen Speicher gespeichert ist, und wobei die Speicheradresse (ADDR) ein viertes Feld (W#) umfasst, das einen jeweiligen Speicherplatz der jeweiligen Vielzahl von Speicherplätzen angibt.

6. Verarbeitungssystem nach Anspruch 4 oder 5, wobei jede Speicherstelle der Vielzahl, NB, von Speichern (48₁-48_{NB}) und des weiteren Speichers (40) eine Vielzahl von Bytes umfasst, und wobei die Speicheradresse (ADDR) ein fünftes Feld (B#) umfasst, das eine Untermenge der Bytes des Speicherplatzes angibt, die durch das erste Feld (MEMT), das zweite Feld (SLOT#), das dritte Feld (DC) und optional das vierte Feld (W#) angegeben sind.

7. Verarbeitungssystem nach einem der Ansprüche 3 bis 6, wobei das Kommunikationssystem (114, 1022, 46, 110, 104b) eine Slave-Kommunikationsschnittstelle (46) umfasst, die dem Hardware-Netzwerkbeschleuniger (4) zugeordnet ist, wobei das Kommunikationssystem (114, 1022, 46, 110, 104b) einen physischen Adressbereich aufweist, der einen physischen Adressunterbereich aufweist, der der Slave-Kommunikationsschnittstelle (46) zugeordnet ist, wobei die Slave-Kommunikationsschnittstelle (46) für Folgendes konfiguriert ist:
- Empfangen einer Schreibanfrage von dem Mikroprozessor (1020), wobei die Schreibanfrage eine Adresse (ADR) im physischen Adressunterbereich und jeweilige übertragene Daten umfasst;
- Extrahieren einer Speicheradresse (ADDR) in der Adresskarte der Adressübersetzungs- und Dispatcherschaltung (424) aus der Adresse (ADR) im physikalischen Adressunterbereich; und
- Bereitstellen einer Speicherschreibanfrage an die Adressübersetzungs- und Dispatcherschaltung (424), wobei die Speicherschreibanfrage die extrahierte Speicheradresse (ADDR) und die übertragenen Daten umfasst.

8. Verarbeitungssystem nach einem der vorhergehenden Ansprüche, wobei jede Ethernet-Kommunikationsschnittstelle (40₁-40_{NP}) eine Suchmaschine (400) umfasst, die eine Vielzahl von Suchschaltungen (400₁-400_{NB}) umfasst, wobei jede Suchschaltung (400₁-400_{NB}) für Folgendes konfiguriert ist:
- Zugreifen auf einen jeweiligen Speicher der Vielzahl, NB, von Speichern (48₁-48_{NB}), um mindestens teilweise die in dem jeweiligen Speicher der Vielzahl, NB, von Speichern (48₁-48_{NB}) gespeicherten Datensätze (RTEA) sequenziell zu lesen; und
- Vergleichen der Ziel-IP-Adresse mit den Ziel-IP-Daten (IP_DA, SUBNET) der jeweiligen gelesenen Datensätze (RTEA), die gültige Daten enthalten, um festzustellen, ob der Datensatz (RTEA) einen Ziel-IP-Adressbereich aufweist, der die Ziel-IP-Adresse enthält.

9. Verarbeitungssystem nach Anspruch 8, wobei jede Suchschaltung (400₁-400_{NB}) so konfiguriert ist, dass sie die in dem jeweiligen Speicher der Vielzahl, NB, von Speichern (48₁-48_{NB}) gespeicherten Datensätze (RTEA) sequenziell liest, bis die Freigabedaten (EN) angeben, dass der jeweilige Datensatz (RTEA) keine gültigen Daten enthält, oder mindestens eine der Suchschaltungen (400₁-400_{NB}) feststellt, dass ein Datensatz (RTEA) einen Ziel-IP-Adressbereich aufweist, der die Ziel-IP-Adresse enthält.

10. Verarbeitungssystem nach einem der vorhergehenden Ansprüche, wobei der Hardware-Netzwerkbeschleuniger (4) eine Speichersteuerung (42) umfasst, die so konfiguriert ist, dass sie entscheidet, welche der Ethernet-Kommunikationsschnittstellen (40₁-40_{NP}) auf die Vielzahl, NB, von Speichern (48₁-48_{NB}) und den weiteren Speicher (50) zugreifen kann.

11. Integrierte Schaltung, die ein Verarbeitungssystem nach einem der vorhergehenden Ansprüche umfasst.

12. Vorrichtung, wie ein Fahrzeug, die eine Vielzahl von Verarbeitungssystemen nach einem der vorhergehenden Ansprüche umfasst, wobei die Verarbeitungssysteme (10a) mit einem Ethernet-Kommunikationssystem (20) verbunden sind.

13. Betriebsverfahren für ein Verarbeitungssystem nach einem der vorhergehenden Ansprüche 1 bis 10, das Folgendes umfasst:
- Programmieren einer Vielzahl von Datensätzen (RTEA) in der Vielzahl, NB, von Speichern (48₁-48_{NB}) und jeweiliger weiterer Datensätze (RTEB) in dem weiteren Speicher (50) über den Mikroprozessor (1020) des Verarbeitungssystems, wobei jeder Datensatz (RTEA) eindeutig einem jeweiligen weiteren Datensatz (RTEB) zugeordnet ist, wobei jeder Datensatz (RTEA) Folgendes umfasst:
- Freigabedaten (EN), die angeben, ob der jeweilige Datensatz (RTEA) gültige Daten enthält,
- Ziel-IP-Daten (IP_DA, SUBNET), die einen Ziel-IP-Adressbereich identifizieren;
und jeder weitere Datensatz (RTEB) Folgendes umfasst:
- Next-Hop-Daten (IP_NH), die eine Next-Hop-IP-Adresse angeben,
- Next-Hop-Freigabedaten (IP_NH), die angeben, ob ein jeweiliger Ziel-IP-Adressbereich direkt oder über die jeweilige Next-Hop-IP-Adresse erreicht werden kann,
- Netzwerkportdaten (DST_PORT), die eine der Vielzahl, NP, von Ethernet-Kommunikationsschnittstellen angeben;
- Bereitstellen eines IP-Pakets an eine der Ethernet-Kommunikationsschnittstellen (40₁-40_{NP)}, wodurch:
a) die Ethernet-Kommunikationsschnittstelle (40₁-40_{NP})
- ein IP-Paket erhält, das eine Ziel-IP-Adresse umfasst,
- parallel auf die Vielzahl, NB, von Speichern (48₁-48_{NB}) zugreift (400₁-400_{NB}), um mindestens teilweise die in jedem der Vielzahl, NB, von Speichern (48₁-48_{NB}) gespeicherten Datensätze (RTEA) sequenziell zu lesen,
- die Ziel-IP-Adresse mit den Ziel-IP-Daten (IP_DA, SUBNET) der gelesenen Datensätze (RTEA), die gültige Daten enthalten, vergleicht, um einen Datensatz (RTEA) auszuwählen, der einen Ziel-IP-Adressbereich aufweist, der die Ziel-IP-Adresse enthält,
- den weiteren Datensatz (RTEB), der dem ausgewählten Datensatz (RTEA) zugeordnet ist, aus dem weiteren Speicher (50) liest, und
- eine der Ethernet-Kommunikationsschnittstellen (40₁-40_{NP}) basierend auf den Netzwerkportdaten (DST_PORT) des gelesenen weiteren Datensatzes (RTEB) auswählt; und b) die ausgewählte Ethernet-Kommunikationsschnittstelle (40₁-40_{NP}) :
- eine Ziel-IP-Adresse bestimmt durch das Auswählen von:
a) der Ziel-IP-Adresse, wenn die Next-Hop-Freigabedaten (IP_NH) des gelesenen weiteren Datensatzes (RTEB) angeben, dass der jeweilige Ziel-IP-Adressbereich direkt erreicht werden kann, oder
b) der Next-Hop-IP-Adresse des gelesenen weiteren Datensatzes (RTEB), wenn die Next-Hop-Freigabedaten (IP_NH) des gelesenen weiteren Datensatzes (RTEB) angeben, dass der jeweilige Ziel-IP-Adressbereich über die jeweilige Next-Hop-IP-Adresse erreicht werden kann,
- eine Ziel-Media-Access-Control-Adresse (Ziel-MAC-Adresse) für die Ziel-IP-Adresse bestimmt,
- einen Ethernet-Frame erzeugt, der einen Ethernet-Header (E_H) und als Nutzlast das IP-Paket umfasst, wobei der Ethernet-Header (E_H) als Ziel-MAC-Adresse die Ziel-MAC-Adresse und eine für die jeweilige Ethernet-Kommunikationsschnittstelle (40₁-40_{NP}) konfigurierte Quell-MAC-Adresse umfasst, und
- den Ethernet-Frame an ein Ethernet-Netzwerk (20) überträgt, das mit der ausgewählten Ethernet-Kommunikationsschnittstelle (40₁-40_{NP}) verbunden ist.

## Revendications

1. Système de traitement comprenant un accélérateur de réseau matériel (4), un microprocesseur (1020) et un système de communication (114, 1022, 46, 110, 104b) reliant ledit microprocesseur (1020) audit accélérateur de réseau matériel (4), dans lequel ledit accélérateur de réseau matériel (4) comprend une pluralité, NP, d'interfaces de communication Ethernet (40₁-40_{NP}) et une pluralité, NB, de mémoires (48₁-48_{NB}) ;
**caractérisé en ce que** ledit accélérateur de réseau matériel (4) comprend une autre mémoire (50), dans lequel chaque mémoire de ladite pluralité, NB, de mémoires (48₁-48_{NB}) est configurée pour stocker une pluralité d'enregistrements (RTEA), chaque enregistrement (RTEA) comprenant :
- des données de validation (EN) indiquant si l'enregistrement (RTEA) respectif contient des données valides,
- des données IP de destination (IP_DA, SUBNET) identifiant une plage d'adresses IP de destination ;
dans lequel ladite autre mémoire (50) est configurée pour stocker une pluralité d'autres enregistrements (RTEB), dans lequel chaque enregistrement (RTEA) est associé de façon univoque à un autre enregistrement respectif (RTEB), et dans lequel chaque autre enregistrement (RTEB) comprend :
- des données de saut suivant (IP_NH) indiquant une adresse IP de saut suivant,
- des données de validation de saut suivant (IP_NH) indiquant si une plage d'adresses IP de destination respective peut être atteinte directement ou via l'adresse IP de saut suivant respective,
- des données de port réseau (DST_PORT) indiquant une interface de ladite pluralité, NP, d'interfaces de communication Ethernet ;
dans lequel chaque interface de communication Ethernet (40₁-40_{NP}) est configurée pour :
- obtenir un paquet IP comprenant une adresse IP de destination,
- accéder en parallèle (400₁-400_{NB}) à ladite pluralité, NB, de mémoires (48₁-48_{NB}) afin de lire de façon séquentielle au moins en partie les enregistrements (RTEA) stockés dans chaque mémoire de ladite pluralité, NB, de mémoires (48₁-48_{NB}),
- comparer ladite adresse IP de destination avec les données IP de destination (IP_DA, SUBNET) des enregistrements lus (RTEA) contenant des données valides afin de sélectionner un enregistrement (RTEA) ayant une plage d'adresses IP de destination contenant ladite adresse IP de destination,
- lire l'autre enregistrement (RTEB) associé audit enregistrement sélectionné (RTEA) dans ladite autre mémoire (50), et
- sélectionner l'une desdites interfaces de communication Ethernet (40₁-40_{NP}) en se basant sur lesdites données de port réseau (DST_PORT) dudit autre enregistrement lu (RTEB) ;
dans lequel ladite interface de communication Ethernet sélectionnée (40₁-40_{NP}) est configurée pour :
- déterminer une adresse IP cible en sélectionnant :
a) ladite adresse IP de destination lorsque les données de validation de saut suivant (IP_NH) dudit autre enregistrement lu (RTEB) indiquent que la plage d'adresses IP de destination respective peut être atteinte directement, ou
b) l'adresse IP de saut suivant dudit autre enregistrement lu (RTEB) lorsque les données de validation de saut suivant (IP_NH) dudit autre enregistrement lu (RTEB) indiquent que la plage d'adresses IP de destination respective peut être atteinte via l'adresse IP de saut suivant respective,
- déterminer une adresse cible de contrôle d'accès au support, MAC, pour ladite adresse IP cible,
- générer une trame Ethernet comprenant un en-tête Ethernet (E_H) et comme charge utile ledit paquet IP, dans laquelle ledit en-tête Ethernet (E_H) comprend comme adresse MAC de destination ladite adresse MAC cible et une adresse MAC source configurée pour l'interface de communication Ethernet respective (40₁-40_{NP}), et
- transmettre ladite trame Ethernet à un réseau Ethernet (20) connecté à l'interface de communication Ethernet sélectionnée (40₁-40_{NP}) ; et
dans lequel ledit microprocesseur (1020) est adapté pour programmer lesdits enregistrements (RTEA) dans ladite pluralité, NB, de mémoires (48₁-48_{NB}) et lesdits autres enregistrements (RTEB) dans ladite autre mémoire (50).

2. Système de traitement selon la revendication 1, dans lequel chaque enregistrement (RTEA) comprend :
- une première section de données (IP_DA) comprenant une adresse IP de destination incluse dans la plage d'adresses IP de destination respective, et
- une première section de données de commande (IP_DA_CNTRL) comprenant lesdites données de validation (EN) et un champ (SUBNET) pour stocker un masque de sous-réseau ou de réseau pour la plage d'adresses IP de destination respective ; et
dans lequel chaque autre enregistrement (RTEB) comprend :
- une deuxième section de données (IP_NH) comprenant ladite adresse IP de saut suivant, et
- une deuxième section de données de commande (IP_NH_CNTRL) comprenant lesdites données de validation de saut suivant (IP_NH) et lesdites données de port réseau (DST_PORT).

3. Système de traitement selon la revendication 1 ou 2, dans lequel ledit accélérateur de réseau matériel (4) comprend un circuit traducteur d'adresse et répartiteur (424) configuré pour gérer une carte d'adresses, dans lequel chaque emplacement de mémoire dans ladite pluralité, NB, de mémoires (48₁-48_{NB}) et chaque emplacement de mémoire dans ladite autre mémoire (50) est associé à une adresse de mémoire respective dans ladite carte d'adresses, dans lequel ledit circuit traducteur d'adresse et répartiteur (424) configuré pour :
- recevoir une demande d'écriture en mémoire comprenant une adresse de mémoire (ADDR) dans ladite carte d'adresses et des données respectives à stocker,
- sélectionner une mémoire parmi ladite pluralité, NB, de mémoires (48₁-48_{NB}) et ladite autre mémoire (50) en fonction de ladite adresse de mémoire reçue (ADDR),
- sélectionner un emplacement de mémoire de la mémoire sélectionnée en fonction de ladite adresse de mémoire reçue (ADDR), et
- stocker lesdites données à stocker à l'emplacement de mémoire sélectionné de la mémoire sélectionnée.

4. Système de traitement selon une combinaison des revendications 2 et 3, dans lequel ladite adresse de mémoire (ADDR) comprend un premier champ (MEMT), un deuxième champ (SLOT#) et un troisième champ (DC),
dans lequel ledit premier champ (MEMT) indique si les données reçues doivent être stockées dans ladite pluralité, NB, de mémoires (48₁-48_{NB}) ou dans ladite autre mémoire (40) ;
dans lequel, lorsque ledit premier champ (MEMT) indique que les données reçues doivent être stockées dans ladite pluralité (NB) de mémoires (48₁-48_{NB}), ledit deuxième champ (SLOT#) indique un enregistrement (RTEA) dans ladite pluralité (NB) de mémoires (48₁-48_{NB}), et ledit troisième champ (DC) indique si les données reçues doivent être stockées dans la première section de données (IP_DA) ou dans la première section de données de commande (IP_DA_CNTRL) de l'enregistrement (RTEA) indiqué par ledit deuxième champ (SLOT#) ; et
dans lequel, lorsque ledit premier champ (MEMT) indique que les données reçues doivent être stockées dans ladite autre mémoire (50), ledit deuxième champ (SLOT#) indique un autre enregistrement (RTEB) dans ladite autre mémoire (50), et ledit troisième champ (DC) indique si les données reçues doivent être stockées dans la deuxième section de données (IP_NH) ou dans la deuxième section de données de commande (IP_NH_CNTRL) de l'autre enregistrement (RTEB) indiqué par ledit deuxième champ (SLOT#).

5. Système de traitement selon la revendication 4, dans lequel au moins l'une desdites première section de données (IP_DA), première section de données de commande (IP_DA_CNTRL), deuxième section de données (IP_NH) et deuxième section de données de commande (IP_NH_CNTRL) est stockée dans une pluralité de bancs de mémoire dans la mémoire respective, et dans lequel ladite adresse de mémoire (ADDR) comprend un quatrième champ (W#) indiquant un banc de mémoire respectif de la pluralité respective de bancs de mémoire.

6. Système de traitement selon la revendication 4 ou 5, dans lequel chaque emplacement de mémoire de ladite pluralité, NB, de mémoires (48₁-48_{NB}) et de ladite autre mémoire (40) comprend une pluralité d'octets, et dans lequel ladite adresse de mémoire (ADDR) comprend un cinquième champ (B#) indiquant un sous-ensemble des octets du banc de mémoire indiqué par ledit premier champ (MEMT), ledit deuxième champ (SLOT#), ledit troisième champ (DC) et éventuellement ledit quatrième champ (W#).

7. Système de traitement selon l'une quelconque des revendications 3 à 6, dans lequel ledit système de communication (114, 1022, 46, 110, 104b) comprend une interface de communication esclave (46) associée audit accélérateur de réseau matériel (4), dans lequel ledit système de communication (114, 1022, 46, 110, 104b) a une plage d'adresses physiques ayant une sous-plage d'adresses physiques associée à ladite interface de communication esclave (46), dans lequel ladite interface de communication esclave (46) est configurée pour :
- recevoir une demande d'écriture dudit microprocesseur (1020), ladite demande d'écriture comprenant une adresse (ADR) dans ladite sous-plage d'adresses physiques et des données transmises respectives ;
- extraire une adresse de mémoire (ADDR) dans ladite carte d'adresses dudit circuit traducteur d'adresse et répartiteur (424) de ladite adresse (ADR) dans ladite sous-plage d'adresses physiques ; et
- fournir une demande d'écriture en mémoire audit circuit traducteur d'adresse et répartiteur (424), ladite demande d'écriture en mémoire comprenant ladite adresse de mémoire extraite (ADDR) et lesdites données transmises.

8. Système de traitement selon l'une quelconque des revendications précédentes, dans lequel chaque interface de communication Ethernet (40₁-40_{NP}) comprend un moteur de recherche (400) comprenant une pluralité de circuits de recherche (400₁-400_{NB}), dans lequel chaque circuit de recherche (400₁-400_{NB}) est configuré pour :
- accéder à une mémoire respective de ladite pluralité, NB, de mémoires (48₁-48_{NB}) afin de lire de façon séquentielle au moins en partie les enregistrements (RTEA) stockés dans la mémoire respective de ladite pluralité, NB, de mémoires (48₁-48_{NB}) ; et
- comparer ladite adresse IP de destination avec les données IP de destination (IP_DA, SUBNET) des enregistrements lus respectifs (RTEA) contenant des données valides afin de déterminer si l'enregistrement (RTEA) a une plage d'adresses IP de destination contenant ladite adresse IP de destination.

9. Système de traitement selon la revendication 8, dans lequel chaque circuit de recherche (400₁-400_{NB}) est configuré pour lire de façon séquentielle les enregistrements (RTEA) stockés dans la mémoire respective de ladite pluralité, NB, de mémoires (48₁-48_{NB}) jusqu'à ce que lesdites données de validation (EN) indiquent que l'enregistrement (RTEA) respectif ne contient pas de données valides ou qu'au moins l'un desdits circuits de recherche (400₁-400_{NB}) détermine qu'un enregistrement (RTEA) a une plage d'adresses IP de destination contenant ladite adresse IP de destination.

10. Système de traitement selon l'une quelconque des revendications précédentes, dans lequel ledit accélérateur de réseau matériel (4) comprend un contrôleur de mémoire (42) configuré pour décider laquelle desdites interfaces de communication Ethernet (40₁-40_{NP}) peut accéder à ladite pluralité, NB, de mémoires (48₁-48_{NB}) et à ladite autre mémoire (50).

11. Circuit intégré comprenant un système de traitement selon l'une quelconque des revendications précédentes.

12. Dispositif, tel qu'un véhicule, comprenant une pluralité de systèmes de traitement selon l'une quelconque des revendications précédentes, dans lequel lesdits systèmes de traitement (10a) sont connectés à un système de communication Ethernet (20).

13. Procédé de mise en œuvre d'un système de traitement selon l'une quelconque des précédentes revendications 1 à 10, comprenant les étapes suivantes :
- programmer au moyen du microprocesseur (1020) dudit système de traitement une pluralité d'enregistrements (RTEA) dans la pluralité, NB, de mémoires (48₁-48_{NB}) et d'autres enregistrements (RTEB) respectifs dans ladite autre mémoire (50), dans lequel chaque enregistrement (RTEA) est associé de façon univoque à un autre enregistrement respectif (RTEB), dans lequel chaque enregistrement (RTEA) comprend :
- des données de validation (EN) indiquant si l'enregistrement (RTEA) respectif contient des données valides,
- des données IP de destination (IP_DA, SUBNET) identifiant une plage d'adresses IP de destination ;
et chaque autre enregistrement (RTEB) comprend :
- des données de saut suivant (IP_NH) indiquant une adresse IP de saut suivant,
- des données de validation de saut suivant (IP_NH) indiquant si une plage d'adresses IP de destination respective peut être atteinte directement ou via l'adresse IP de saut suivant respective,
- des données de port réseau (DST_PORT) indiquant une interface de ladite pluralité, NP, d'interfaces de communication Ethernet ;
- fournir un paquet IP à l'une desdites interfaces de communication Ethernet (40₁-40_{NP}), moyennant quoi :
a) ladite interface de communication Ethernet (40₁-40_{NP}) :
- obtient un paquet IP comprenant une adresse IP de destination,
- accède en parallèle (400₁-400_{NB}) à ladite pluralité, NB, de mémoires (48₁-48_{NB}) afin de lire de façon séquentielle au moins en partie les enregistrements (RTEA) stockés dans chaque mémoire de ladite pluralité, NB, de mémoires (48₁-48_{NB}),
- compare ladite adresse IP de destination avec les données IP de destination (IP_DA, SUBNET) des enregistrements lus (RTEA) contenant des données valides afin de sélectionner un enregistrement (RTEA) ayant une plage d'adresses IP de destination contenant ladite adresse IP de destination,
- lit l'autre enregistrement (RTEB) associé audit enregistrement sélectionné (RTEA) dans ladite autre mémoire (50), et
- sélectionne l'une desdites interfaces de communication Ethernet (40₁-40_{NP}) en se basant sur lesdites données de port réseau (DST_PORT) dudit autre enregistrement lu (RTEB) ; et
b) ladite interface de communication Ethernet sélectionnée (40₁-40_{NP}) :
- détermine une adresse IP cible en sélectionnant :
a) ladite adresse IP de destination lorsque les données de validation de saut suivant (IP_NH) dudit autre enregistrement lu (RTEB) indiquent que la plage d'adresses IP de destination respective peut être atteinte directement, ou
b) l'adresse IP de saut suivant dudit autre enregistrement lu (RTEB) lorsque les données de validation de saut suivant (IP_NH) dudit autre enregistrement lu (RTEB) indiquent que la plage d'adresses IP de destination respective peut être atteinte via l'adresse IP de saut suivant respective,
- détermine une adresse cible de contrôle d'accès au support, MAC, pour ladite adresse IP cible,
- génère une trame Ethernet comprenant un en-tête Ethernet (E_H) et comme charge utile ledit paquet IP, dans laquelle ledit en-tête Ethernet (E_H) comprend comme adresse MAC de destination ladite adresse MAC cible et une adresse MAC source configurée pour l'interface de communication Ethernet respective (40₁-40_{NP}), et
- transmet ladite trame Ethernet à un réseau Ethernet (20) connecté à l'interface de communication Ethernet sélectionnée (40₁-40_{NP}).
